(19) Europäisches Patentamt
European Patent Office
Office européen des brevets

(11) **EP 4 249 108 A1**

(12) **EUROPEAN PATENT APPLICATION**
published in accordance with Art. 153(4) EPC

(43) Date of publication:
**27.09.2023 Bulletin 2023/39**

(21) Application number: **21894728.1**

(22) Date of filing: **18.11.2021**

(51) International Patent Classification (IPC):
*B01D 69/00* (2006.01)  *B01D 69/02* (2006.01)
*B01D 69/08* (2006.01)  *B01D 71/26* (2006.01)
*B01D 71/30* (2006.01)  *B01D 71/32* (2006.01)
*B01D 71/34* (2006.01)  *B01D 71/36* (2006.01)

(52) Cooperative Patent Classification (CPC):
**B01D 69/00; B01D 69/02; B01D 69/08;
B01D 71/26; B01D 71/30; B01D 71/32;
B01D 71/34; B01D 71/36**

(86) International application number:
**PCT/JP2021/042475**

(87) International publication number:
**WO 2022/107856 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2020  JP 2020192591**

(71) Applicant: **Asahi Kasei Kabushiki Kaisha
Tokyo 1000006 (JP)**

(72) Inventors:
• **MIKI Yuki
Tokyo 100-0006 (JP)**
• **FUJIMURA Hirokazu
Tokyo 100-0006 (JP)**
• **UMEMOTO Hiroki
Tokyo 100-0006 (JP)**
• **MATSUYAMA Ayu
Tokyo 100-0006 (JP)**

(74) Representative: **Strehl Schübel-Hopf & Partner
Maximilianstrasse 54
80538 München (DE)**

(54) **POROUS MEMBRANE**

(57) Provided is a porous membrane having high filtration performance and little deterioration of water permeation performance due to membrane surface abrasion when used in a method of clarifying, by membrane filtration, turbid water that is natural water, domestic wastewater, or water resulting from treatment thereof. In the porous membrane, a ratio of internal porosity in a thickness up to 0.12% of membrane thickness from a topmost surface of a surface at a filtration feed side relative to surface porosity of the surface at the filtration feed side is 1.05 or more.

*FIG. 1*

**Description**

TECHNICAL FIELD

The present disclosure relates to a porous membrane.

BACKGROUND

Tap water treatment is a process of obtaining drinking water or industrial water from natural water sources such as river water, lake and marsh water, and underground water, which are types of turbid water. Sewage treatment is a process of obtaining regenerated water for miscellaneous use or clarified water that can be discharged through treatment of domestic wastewater such as sewage. In these treatments, it is essential to remove suspended matter by performing a solid-liquid separation operation (clarification operation). In tap water treatment, suspended matter (clay, colloids, bacteria, etc.) originating from a natural water source (turbid water) are removed. In sewage treatment, suspended matter (sludge, etc.) is removed from treated water that has undergone biological treatment (secondary treatment) through suspended matter, activated sludge, or the like in sewage.

These clarification operations have conventionally been performed mainly by sedimentation, sand filtration, or coagulation sedimentation and sand filtration, but the use of membrane filtration is also becoming more common in recent years. Examples of advantages of membrane filtration include the following.

(1) High and stable clarification level of obtained water quality (high safety of obtained water)
(2) Small installation space of filtration apparatus
(3) Ease of automatic operation

For example, in the case of tap water treatment, membrane filtration may be used instead of coagulation sedimentation and sand filtration or may be used at a later stage than coagulation sedimentation and sand filtration, for example, as a means of further improving the water quality of treated water that has undergone coagulation sedimentation and sand filtration. The use of membrane filtration in sewage treatment is also being investigated for separation of sludge from water that has undergone secondary treatment of sewage, for example.

Such clarification operations by membrane filtration are mainly performed by ultrafiltration membranes or microfiltration membranes (pore diameter in a range of several nanometers to several hundreds of nanometers) having a hollow fiber shape. There are two types of filtration schemes using hollow fiber filtration membranes: internal pressure filtration in which filtration is performed from an internal surface side of the membrane toward an external surface side of the membrane; and external pressure filtration in which filtration is performed from an external surface side of the membrane toward an internal surface side of the membrane. Of these filtration schemes, external pressure filtration is advantageous in terms that a larger membrane surface area can be provided at a side that is in contact with turbid source water, and thus the suspended matter load per unit membrane surface area can be reduced. Patent Literature (PTL) 1 to 3 disclose hollow fibers and production methods for these hollow fibers.

Clarification by membrane filtration has numerous advantages that conventional sedimentation and sand filtration lack as described above, and thus membrane filtration is becoming more commonly used in tap water treatment and sewage treatment as an alternative technique or complementary technique for conventional methods. However, widespread adoption of membrane filtration is being hindered by the lack of establishment of a technique for performing stable membrane filtration operation over a long period (refer to Non-Patent Literature (NPL) 1). Stable membrane filtration operation is mainly hindered by deterioration of water permeation performance of a membrane. The main cause of deterioration of water permeation performance is membrane clogging (fouling) caused by suspended matter and the like (refer to NPL 1). There are also instances in which water permeation performance is reduced due to suspended matter rubbing against and abrading the membrane surface.

Incidentally, one known production method for porous membranes is thermally induced phase separation. This production method uses a thermoplastic resin and an organic liquid. The organic liquid is a solvent that dissolves the thermoplastic resin at high temperature but does not dissolve the thermoplastic resin at room temperature (i.e., a latent solvent). Thermally induced phase separation is a method in which the thermoplastic resin and the organic liquid are kneaded at high temperature to cause dissolution of the thermoplastic resin in the organic liquid, are subsequently cooled to room temperature so as to induce phase separation, and then the organic liquid is removed to produce a porous product. This method has the following advantages.

(a) Even a polymer such as polyethylene for which there is no appropriate solvent that can cause dissolution at room temperature can be used to form a membrane.

(b) Particularly in a situation in which the thermoplastic resin is a crystalline resin, it is easy to promote crystallization during membrane production and obtain a membrane having high strength because membrane production is performed through dissolution at high temperature and subsequent cooling and solidification.

Due to these advantages, this method is widely used as a method for producing porous membranes (for example, refer to NPL 2 to 5).

CITATION LIST

Patent Literature

PTL 1: JP S60-139815 A
PTL 2: JP H3-215535 A
PTL 3: JP H4-065505 A

Non-Patent Literature

NPL 1: Y. Watanabe, R. Bian, Membrane, 24(6), 1999, pp. 310-318
NPL 2: Editorial Committee of Dictionary of Plastic and Functional Polymeric Materials, "Dictionary of Plastic and Functional Polymeric Materials", Industrial Research Center of Japan, February 2004, pp. 672-679
NPL 3: Hideto Matsuyama, "Production of Polymeric Porous Membranes by Thermally Induced Phase Separation (TIPS)", Chemical Engineering, Kagaku Kogyo-sha Co., Ltd., June 1998, pp. 45-56
NPL 4: Akira Takizawa, "Membranes", IPC, January 1992, pp. 404-406
NPL 5: D. R. Lloyd, et al., Journal of Membrane Science, 64, 1991, pp. 1-11

SUMMARY

(Technical Problem)

An object of the present disclosure is to provide a porous membrane having high filtration performance and little deterioration of water permeation performance due to membrane surface abrasion. A porous membrane according to the present disclosure can suitably be used in a method of clarifying, by membrane filtration, turbid water that is natural water, domestic wastewater, or water resulting from treatment thereof, for example.

(Solution to Problem)

As a result of dedicated efforts to solve the problem set forth above, the inventors found that a porous membrane has high filtration performance and high abrasion resistance when a ratio of internal porosity in a thickness up to 0.12% of membrane thickness from a topmost surface of a surface at a filtration feed side relative to surface porosity of that surface is set as 1.05 or more. In addition, the inventors found that an even better effect is obtained by increasing the polymer skeleton size at that position.

The use of a membrane having high surface porosity in filtration is known to inhibit deterioration of water permeation performance caused by clogging (WO 2001/053213 A1). Increasing the internal porosity of the overall membrane may also enable improvement of water permeation performance in the same manner, but makes it difficult to achieve a balance with strength because this reduces the concentration of a polymer that forms the membrane.

Reduction of water permeation performance due to membrane surface abrasion is thought to mainly occur not during filtration operation, but instead when suspended matter that has been deposited on an external surface of the membrane through external pressure filtration is stripped from the external surface of the membrane by air cleaning or the like. However, this phenomenon is not widely known, and there has been little development of techniques for dealing with deterioration of water permeation performance caused by membrane surface abrasion. JP H11-138164 A merely discloses the use of a membrane having high breaking strength as a means of inhibiting change of membrane performance due to washing by air bubbling.

Moreover, WO 2015/104871 A1 describes a means of inhibiting abrasion through adjustment of surface porosity, but surface porosity by itself is not an adequate means of inhibiting abrasion.

The inventors found that a membrane having high filtration performance without reduction of strength and also having high abrasion resistance can be produced through a ratio of internal porosity in a thickness up to 0.12% of membrane thickness from a topmost surface of a surface at a filtration feed side relative to surface porosity of that surface being set as 1.05 or more, thereby leading to the present disclosure.

The present disclosure provides the following.

[1] A porous membrane in which a ratio of internal porosity in a thickness up to 0.12% of membrane thickness from a topmost surface of a surface at a filtration feed side relative to surface porosity of the surface at the filtration feed side is 1.05 or more.

[2] The porous membrane according to [1], wherein surface porosity of the surface at the filtration feed side is 25% or more.

[3] The porous membrane according to [1] or [2], wherein internal porosity in a thickness up to 0.12% of the membrane thickness from the topmost surface of the surface at the filtration feed side is 35% or more.

[4] The porous membrane according to any one of [1] to [3], wherein polymer skeleton size in a thickness up to 0.12% of the membrane thickness from the topmost surface of the surface at the filtration feed side is 100 nm or more.

[5] The porous membrane according to any one of [1] to [4], wherein surface porosity of the surface at the filtration feed side is 35% or more.

[6] The porous membrane according to any one of [1] to [5], wherein a ratio of internal porosity in a thickness up to 0.04% of the membrane thickness from the topmost surface of the surface at the filtration feed side relative to surface porosity of the surface at the filtration feed side is 0.7 or more.

[7] The porous membrane according to any one of [1] to [6], wherein internal porosity in a thickness up to 0.04% of the membrane thickness from the topmost surface of the surface at the filtration feed side is 20% or more.

[8] The porous membrane according to any one of [1] to [7], wherein polymer skeleton size in a thickness up to 0.04% of the membrane thickness from the topmost surface of the surface at the filtration feed side is 100 nm or more.

[9] The porous membrane according to any one of [1] to [8], wherein surface porosity of the surface at the filtration feed side is 35% or more and internal porosity in a thickness up to 0.12% of the membrane thickness from the topmost surface of the surface at the filtration feed side is 40% or more.

[10] The porous membrane according to any one of [1] to [9], wherein cross-sectional pore diameter in a thickness up to 0.12% of the membrane thickness from the topmost surface of the surface at the filtration feed side is 300 nm or less.

[11] The porous membrane according to any one of [1] to [10], wherein the membrane thickness is not less than 100 $\mu$m and not more than 500 $\mu$m.

[12] The porous membrane according to any one of [1] to [11], wherein the porous membrane is a hollow fiber membrane and is formed of a thermoplastic resin.

[13] The porous membrane according to [12], wherein the thermoplastic resin includes a fluororesin as a main component.

[14] The porous membrane according to [13], wherein the fluororesin includes one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins.

[15] A porous membrane in which a product of internal porosity in a thickness up to 0.12% of membrane thickness from a topmost surface of a surface at a filtration feed side multiplied by surface porosity of the surface at the filtration feed side is 860%·% or more.

[16] The porous membrane according to [15], wherein internal porosity in a thickness up to 0.12% of the membrane thickness from the topmost surface of the surface at the filtration feed side is 35% or more.

[17] The porous membrane according to [15] or [16], wherein surface porosity of the surface at the filtration feed side is 25% or more.

[18] The porous membrane according to any one of [15] to [17], wherein a ratio of internal porosity in a thickness up to 0.12% of the membrane thickness from the topmost surface of the surface at the filtration feed side relative to surface porosity of the surface at the filtration feed side is 1.05 or more.

[19] The porous membrane according to any one of [15] to [18], wherein polymer skeleton size in a thickness up to 0.12% of the membrane thickness from the topmost surface of the surface at the filtration feed side is 100 nm or more.

[20] The porous membrane according to any one of [15] to [19], wherein a product of internal porosity in a thickness up to 0.12% of the membrane thickness from the topmost surface of the surface at the filtration feed side multiplied by surface porosity of the surface at the filtration feed side is 1140%·% or more.

[21] The porous membrane according to any one of [15] to [20], wherein a ratio of internal porosity in a thickness up to 0.04% of the membrane thickness from the topmost surface of the surface at the filtration feed side relative to surface porosity of the surface at the filtration feed side is 0.7 or more.

[22] The porous membrane according to any one of [15] to [21], wherein internal porosity in a thickness up to 0.04% of the membrane thickness from the topmost surface of the surface at the filtration feed side is 20% or more.

[23] The porous membrane according to any one of [15] to [22], wherein polymer skeleton size in a thickness up to 0.04% of the membrane thickness from the topmost surface of the surface at the filtration feed side is 100 nm or more.

[24] The porous membrane according to any one of [15] to [23], wherein surface porosity of the surface at the filtration feed side is 35% or more and internal porosity in a thickness up to 0.12% of the membrane thickness from the topmost surface of the surface at the filtration feed side is 40% or more.

[25] The porous membrane according to any one of [15] to [24], wherein cross-sectional pore diameter in a thickness up to 0.12% of the membrane thickness from the topmost surface of the surface at the filtration feed side is 300 nm or less.

[26] The porous membrane according to any one of [15] to [25], wherein the membrane thickness is not less than 100 $\mu$m and not more than 500 $\mu$m.

[27] The porous membrane according to any one of [15] to [26], wherein the porous membrane is a hollow fiber membrane and is formed of a thermoplastic resin.

[28] The porous membrane according to [27], wherein the thermoplastic resin includes a fluororesin as a main component.

[29] The porous membrane according to [28], wherein the fluororesin includes one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins.

(Advantageous Effect)

Through the present disclosure, a porous membrane having high filtration performance and abrasion resistance is provided.

BRIEF DESCRIPTION OF THE DRAWINGS

In the accompanying drawings:

FIG. 1 is a schematic view of a three-dimensional network structure;
FIG. 2 illustrates configuration of an apparatus for producing a porous hollow fiber membrane;
FIG. 3A is a diagram for describing a method of measuring a boundary between layers and is a diagram for describing a method of determining a line for defining a measurement position for pore length used in boundary measurement;
FIG. 3B is a diagram for describing a method of measuring a boundary between layers and is a diagram for describing a method of measuring pore length using a line determined in FIG. 3A;
FIG. 4 illustrates a procedure for obtaining a binary image of only internal pores at a topmost surface of a membrane;
FIG. 5 is an electron micrograph of a cross-section in proximity to a filtration feed side of a porous hollow fiber membrane obtained in Example 1;
FIG. 6 is an electron micrograph of a cross-section in proximity to a filtration feed side of a porous hollow fiber membrane obtained in Example 8; and
FIG. 7 is a diagram of a filtration module used in a water permeation performance test.

DETAILED DESCRIPTION

An embodiment of the present disclosure is described below in detail. Note that the present disclosure is not limited to the following embodiment.

A porous membrane according to a present embodiment is a porous membrane in which a ratio of the internal porosity in a thickness up to 0.12% of membrane thickness from a topmost surface of a surface at a filtration feed side relative to the surface porosity of the surface at the filtration feed side is 1.05 or more, or is a porous membrane in which a product of the internal porosity in a thickness up to 0.12% of membrane thickness from a topmost surface of a surface at a filtration feed side multiplied by the surface porosity of the surface at the filtration feed side is 860%·% or more. These porous membranes each have high filtration performance and abrasion resistance.

In the porous membrane according to the present embodiment, it is preferable that a ratio of the internal porosity in a thickness up to 0.12% of membrane thickness from a topmost surface of a surface at a filtration feed side relative to the surface porosity of the surface at the filtration feed side is 1.05 or more and that the product of this internal porosity multiplied by this surface porosity is 860%·% or more.

The following describes the porous membrane according to the present embodiment.

The porous membrane according to the present embodiment preferably contains, as a polymeric component (for example, a thermoplastic resin) forming the membrane, a fluororesin based on vinylidene fluoride or chlorotrifluoroethylene, for example, as a main component. The phrase "includes as a main component" as used here means including 50 mass% or more in terms of solid content of the polymeric component. The polymeric component may be just one type of polymeric component or may be a combination of a plurality of types of polymeric components.

Note that although no specific limitations are placed on the weight-average molecular weight (Mw) of a vinylidene fluoride-based resin, the weight-average molecular weight (Mw) is preferably not less than 100,000 and not more than 1,000,000, and more preferably not less than 150,000 and not more than 1,500,000. Moreover, there is no limitation to a vinylidene fluoride-based resin having a single molecular weight, and a plurality of vinylidene fluoride-based resins having different molecular weights may be mixed. Note that the weight-average molecular weight (Mw) referred to in the present embodiment can be measured by gel permeation chromatography (GPC) with a standard resin of known molecular weight as a reference.

On the other hand, the porous membrane may contain another polymeric component. The other polymeric component is not specifically limited but is preferably a polymeric component that is miscible with a vinylidene fluoride-based resin. For example, a fluororesin or the like that displays high chemical resistance of a similar level to a vinylidene fluoride-based resin can suitably be used.

The form of the porous membrane described above can be a form having the membrane structure of a hollow fiber membrane, for example. The term "hollow fiber membrane" as used here refers to a membrane having a hollow ring-shaped form. Through the porous membrane having the membrane structure of a hollow fiber membrane, it is possible to increase the membrane area per unit volume of a module as compared to with a flat membrane.

However, the porous membrane according to the present embodiment is not limited to a porous membrane having the membrane structure of a hollow fiber membrane (i.e., a hollow fiber porous membrane) and may be a porous membrane having another membrane structure such as a flat membrane or a tubular membrane.

The porous membrane according to the present embodiment is preferably a hollow fiber membrane that contains a thermoplastic resin and may be a hollow fiber membrane that is formed of only a thermoplastic resin. The thermoplastic resin preferably includes a fluororesin as a main component and may be formed of only a fluororesin. The fluororesin preferably includes one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins, and may be formed of only one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins.

In the porous membrane according to the present embodiment, a ratio of the internal porosity in a thickness up to 0.12% of membrane thickness from a topmost surface of a surface at a filtration feed side (i.e., in a portion from a position of the topmost surface to a position that is 0.12% in the membrane thickness direction from the topmost surface relative to 100% of the membrane thickness) relative to the surface porosity of the surface at the filtration feed side is preferably 1.05 or more.

When the aforementioned ratio is 1.05 or more, there is good communicability between pores at the surface and pores inside the membrane in proximity to the surface, and blocking of pores in proximity to the surface that contribute the most to filtration has a low tendency to occur. Good communicability of pores in proximity to the surface also enables the achievement of high filtration performance because dirt can easily be removed by washing such as backwashing or through a crossflow effect. The aforementioned ratio is preferably 1.10 or more, and more preferably not less than 1.10 and not more than 2.50. When the aforementioned ratio is 2.50 or less, deformation of polymer forming surface pores tends not to occur, and blocking performance can be maintained.

The aforementioned ratio being 1.05 or more is desirable in the thickness up to 0.12% of the membrane thickness from the topmost surface of the surface at the filtration feed side as previously described. This is because the internal porosity in proximity to a surface that is in contact with the filtration feed is important for achieving high filtration performance. The reason for this is that the surface in contact with the filtration feed has the highest concentration of membrane dirt, and thus blocking of pores may occur and performance of the overall membrane may be affected.

In the porous membrane according to the present embodiment, a ratio of the internal porosity in a thickness up to 0.10% of the membrane thickness from the topmost surface of the surface at the filtration feed side relative to the surface porosity of the surface at the filtration feed side is preferably 1.05 or more, more preferably 1.10 or more, and even more preferably not less than 1.10 and not more than 2.50 for the same purpose.

Moreover, in the porous membrane according to the present embodiment, a ratio of the internal porosity in a thickness up to 0.2% of the membrane thickness from the topmost surface of the surface at the filtration feed side relative to the surface porosity of the surface at the filtration feed side is preferably 1.05 or more, more preferably not less than 1.10 and not more than 2.50, and even more preferably not less than 1.10 and not more than 1.50.

In the porous membrane according to the present embodiment, the surface porosity of the surface at the filtration feed side is preferably 25% or more.

The porous membrane can have high filtration performance when the surface porosity is 25% or more. It is presumed that high filtration performance can be achieved because a high surface porosity results in a small load of membrane dirt per one pore and few completely blocked pores. The surface porosity is preferably 30% or more, more preferably 35% or more, and even more preferably 37% or more. Moreover, the surface porosity may be 60% or less.

In the porous membrane according to the present embodiment, the internal porosity in the thickness up to 0.12% of the membrane thickness from the surface at the filtration feed side is preferably 35% or more, and more preferably 40% or more. An internal porosity of 40% or more makes it possible to achieve high filtration performance with respect to a wider range of filtration feed properties.

It is presumed that high filtration performance can be achieved because an internal porosity of 35% or more results in a small load of membrane dirt per one pore and few completely blocked pores in the same manner as for the surface porosity. The aforementioned internal porosity is preferably not less than 35% and not more than 85%, more preferably not less than 38% and not more than 80%, more preferably not less than 40% and not more than 78%, and particularly preferably not less than 44% and not more than 75%. The porous membrane can have sufficient strength for practical use when the aforementioned internal porosity is 85% or less.

In the porous membrane according to the present embodiment, it is preferable that the surface porosity of the surface at the filtration feed side is 35% or more and that the internal porosity in the thickness up to 0.12% of the membrane thickness from the topmost surface of the surface at the filtration feed side is 40% or more.

In the porous membrane according to the present embodiment, the internal porosity in the thickness up to 0.10% of the membrane thickness from the surface at the filtration feed side is preferably 35% or more, and more preferably 40% or more.

Moreover, in the porous membrane according to the present embodiment, the internal porosity in the thickness up to 0.2% of the membrane thickness from the topmost surface of the surface at the filtration feed side is preferably 35% or more, more preferably not less than 35% and not more than 85%, even more preferably not less than 38% and not more than 80%, even more preferably not less than 40% and not more than 78%, and particularly preferably not less than 44% and not more than 75%. High filtration performance can be achieved when the aforementioned internal porosity is 35% or more because there is a small load of membrane dirt per one pore and there are few pores that are completely blocked, and high filtration performance can be achieved with respect to a wider range of filtration feed properties when the aforementioned internal porosity is 40% or more, whereas the porous membrane can have sufficient strength for practical use when the aforementioned internal porosity is 85% or less.

In the porous membrane according to the present embodiment, it is preferable that a ratio of the internal porosity in a thickness up to 0.04% of the membrane thickness from the topmost surface of the surface at the filtration feed side relative to the surface porosity of the surface at the filtration feed side is 0.7 or more.

When the aforementioned ratio is 0.7 or more, there is good communicability between pores at the surface and pores inside the membrane in proximity to the surface, and high filtration performance can be achieved by exploiting pores at the surface to the maximum extent in filtration. The aforementioned ratio is preferably not less than 0.7 and not more than 1.1. When the aforementioned ratio is 1.1 or less, deformation of polymer forming surface pores tends not to occur, and blocking performance can be maintained.

In the porous membrane according to the present embodiment, it is preferable that the ratio of the internal porosity in the thickness up to 0.12% of the membrane thickness from the topmost surface of the surface at the filtration feed side relative to the surface porosity of the surface at the filtration feed side (also referred to as the "0.12% ratio" in the present specification) is larger than the ratio of the internal porosity in the thickness up to 0.04% of the membrane thickness from the topmost surface of the surface at the filtration feed side relative to the surface porosity of the surface at the filtration feed side (also referred to as the "0.04% ratio" in the present specification). When the 0.12% ratio is larger, this means that communicability is of the same level or improves moving deeper in a membrane thickness direction from the surface and that even higher filtration performance can be achieved.

The difference between the 0.12% ratio and the 0.04% ratio (i.e., "0.12% ratio" - "0.04% ratio") is preferably not less than 0.1 and not more than 0.8, more preferably not less than 0.2 and not more than 0.7, and even more preferably not less than 0.25 and not more than 0.6.

In the porous membrane according to the present embodiment, a ratio of the internal porosity in a thickness up to 0.02% of the membrane thickness from the topmost surface of the surface at the filtration feed side relative to the surface porosity of the surface at the filtration feed side is preferably 0.7 or more for the same purpose as the 0.04% ratio.

Moreover, in the porous membrane according to the present embodiment, a ratio of the internal porosity in a thickness up to 0.067% of the membrane thickness from the topmost surface of the surface at the filtration feed side relative to the surface porosity of the surface at the filtration feed side is preferably 0.7 or more, more preferably not less than 0.7 and not more than 1.1, and even more preferably not less than 0.8 and not more than 1.0.

In the porous membrane according to the present embodiment, the internal porosity in the thickness up to 0.04% of the membrane thickness from the surface at the filtration feed side is preferably 20% or more.

It is presumed that high filtration performance can be achieved when the aforementioned internal porosity is 20% or more because there is a small load of membrane dirt per one pore and there are few pores that are completely blocked in the same manner as for the surface porosity. The aforementioned internal porosity is preferably not less than 20% and not more than 80%, more preferably not less than 25% and not more than 75%, and even more preferably not less than 30% and not more than 70%. When the aforementioned internal porosity is 80% or less, the porous membrane can maintain its membrane structure during application of pressure and can have sufficient strength for practical use.

In the porous membrane according to the present embodiment, the internal porosity in the thickness up to 0.12% of the membrane thickness from the topmost surface of the surface at the filtration feed side is preferably larger than the internal porosity in the thickness up to 0.04% of the membrane thickness from the topmost surface of the surface at the filtration feed side. The difference between the internal porosity in the thickness up to 0.12% and the internal porosity in the thickness up to 0.04% (i.e., "internal porosity (%) in thickness up to 0.12%" - "internal porosity (%) in thickness up to 0.04%") is preferably not less than 5% and not more than 30%, and more preferably not less than 10% and not more than 25%.

In the porous membrane according to the present embodiment, the internal porosity in the thickness up to 0.02% of the membrane thickness from the topmost surface of the surface at the filtration feed side is preferably 20% or more for the same purpose as the internal porosity in the thickness up to 0.04%.

Moreover, in the porous membrane according to the present embodiment, the internal porosity in the thickness up to 0.067% of the membrane thickness from the topmost surface of the surface at the filtration feed side is preferably 20% or more, more preferably not less than 20% and not more than 80%, even more preferably not less than 25% and not more than 75%, and even more preferably not less than 30% and not more than 70%. High filtration performance can be achieved when the aforementioned internal porosity is 20% or more because there is a small load of membrane dirt per one pore and there are few pores that are completely blocked in the same manner as for the surface porosity, whereas the porous membrane can maintain its membrane structure during application of pressure and can have sufficient strength for practical use when the aforementioned internal porosity is 80% or less.

In the porous membrane according to the present embodiment, the polymer skeleton size in the thickness up to 0.12% of the membrane thickness from the topmost surface at the filtration feed side is preferably 100 nm or more.

The aforementioned polymer skeleton size being 100 nm or more is preferable because it inhibits reduction of water permeation performance caused by abrasion in a situation in which shaking in a membrane circumferential direction occurs due to air scouring or the like. This is because when the polymer skeleton size is 100 nm or more, the polymer forming the porous membrane has sufficient strength, which makes it possible to maintain structure without deformation of pores due to abrasion, and to thereby inhibit reduction of water permeation performance. The aforementioned polymer skeleton size is preferably not less than 100 nm and not more than 300 nm, and more preferably not less than 105 nm and not more than 260 nm.

In the porous membrane according to the present embodiment, the polymer skeleton size in the thickness up to 0.10% of the membrane thickness from the topmost surface at the filtration feed side is preferably 100 nm or more for the same purpose as the polymer skeleton size in the thickness up to 0.12%. Moreover, in the porous membrane according to the present embodiment, the polymer skeleton size in the thickness up to 0.2% of the membrane thickness from the topmost surface at the filtration feed side is preferably 100 nm or more, more preferably not less than 100 nm and not more than 300 nm, and even more preferably not less than 105 nm and not more than 260 nm.

In the porous membrane according to the present embodiment, the polymer skeleton size in the thickness up to 0.04% of the membrane thickness from the topmost surface at the filtration feed side is preferably 100 nm or more.

The aforementioned polymer skeleton size being 100 nm or more is preferable because it inhibits reduction of water permeation performance caused by abrasion in a situation in which shaking in a membrane circumferential direction occurs due to air scouring or the like. The aforementioned polymer skeleton size is preferably not less than 100 nm and not more than 300 nm, and more preferably not less than 110 nm and not more than 200 nm.

In the porous membrane according to the present embodiment, a difference between the polymer skeleton size in the thickness up to 0.12% of the membrane thickness from the topmost surface at the filtration feed side and the polymer skeleton size in the thickness up to 0.04% of the membrane thickness from the topmost surface at the filtration feed side (i.e., "polymer skeleton size in thickness up to 0.12%" - "polymer skeleton size in thickness up to 0.04%") is preferably within a range of $\pm 15$ nm, and more preferably within a range of $\pm 10$ nm. Moreover, the polymer skeleton size in the thickness up to 0.12% may be equal to or greater than the polymer skeleton size in the thickness up to 0.04%.

In the porous membrane according to the present embodiment, the polymer skeleton size in the thickness up to 0.02% of the membrane thickness from the topmost surface at the filtration feed side is preferably 100 nm or more for the same purpose as the polymer skeleton size in the thickness up to 0.04%.

Moreover, in the porous membrane according to the present embodiment, the polymer skeleton size in the thickness up to 0.067% of the membrane thickness from the topmost surface at the filtration feed side is preferably 100 nm or more, more preferably not less than 100 nm and not more than 300 nm, and even more preferably not less than 110 nm and not more than 200 nm.

In the porous membrane according to the present embodiment, the cross-sectional pore diameter in the thickness up to 0.12% of the membrane thickness from the topmost surface at the filtration feed side is preferably 300 nm or less.

The aforementioned cross-sectional pore diameter is preferably not less than 100 nm and not more than 300 nm, more preferably not less than 120 nm and not more than 280 nm, and more preferably not less than 150 nm and not more than 250 nm. When the cross-sectional pore diameter is 300 nm or less, the porous membrane can have sufficient blocking performance for practical use.

In the porous membrane according to the present embodiment, the cross-sectional pore diameter in the thickness up to 0.10% of the membrane thickness from the topmost surface at the filtration feed side is preferably 300 nm or less for the same purpose as the cross-sectional pore diameter in the thickness up to 0.12%.

Moreover, in the porous membrane according to the present embodiment, the cross-sectional pore diameter in the thickness up to 0.2% of the membrane thickness from the topmost surface at the filtration feed side is preferably 300 nm or less, more preferably not less than 100 nm and not more than 300 nm, even more preferably not less than 120 nm and not more than 280 nm, and even more preferably not less than 150 nm and not more than 250 nm.

In the porous membrane according to the present embodiment, the product of the internal porosity in the thickness up to 0.12% of the membrane thickness from the surface at the filtration feed side multiplied by the surface porosity of the surface at the filtration feed side is preferably 860%·% or more. The aforementioned product is preferably 1000%·% or more, and more preferably 1140%·% or more. It is presumed that high filtration performance can be achieved when the aforementioned product is 860%·% or more because there is a small load of membrane dirt per one pore both at the surface and in the thickness direction and because there are extremely few pores that are completely blocked. Moreover, the aforementioned product is preferably 5000%·% or less.

In a case in which the porous membrane according to the present embodiment is a hollow fiber membrane, the internal diameter thereof is preferably not less than 0.3 mm and not more than 5 mm. Pressure drop of liquid flowing inside of the hollow fiber membrane is not excessive when the internal diameter is 0.3 mm or more, whereas sufficient compressive strength and breaking strength are easy to achieve with a comparatively thin membrane thickness when the internal diameter is 5 mm or less. The internal diameter is more preferably not less than 0.4 mm and not more than 3 mm, and even more preferably not less than 0.5 mm and not more than 2 mm.

Moreover, the membrane thickness is preferably not less than 0.1 mm and not more than 1 mm. Sufficient compressive strength and breaking strength are easy to achieve when the membrane thickness is 0.1 mm or more, whereas sufficient water permeation performance is easy to achieve when the membrane thickness is 1 mm or less. The membrane thickness is more preferably not less than 0.15 mm and not more than 0.8 mm, even more preferably not less than 0.16 mm and not more than 0.6 mm, and even more preferably not less than 0.17 mm and not more than 0.5 mm. Moreover, the membrane thickness is preferably not less than 0.1 mm and not more than 0.5 mm.

The external diameter is preferably not less than 0.5 mm and not more than 5 mm. The porous membrane can have sufficient tensile strength when the external diameter is 0.5 mm or more. The number of membranes that can be loaded into a vessel housing the porous membrane (preferably a porous hollow fiber membrane) can be increased when the external diameter is 5 mm or less. The external diameter is more preferably not less than 0.6 mm and not more than 4 mm, and even more preferably not less than 0.7 mm and not more than 3 mm.

The porous membrane according to the present embodiment preferably has a pure water permeability of not less than 1,000 $L/m^2/hr$ and not more than 20,000 $L/m^2/hr$. When the pure water permeability is within this range, a balance of filtration performance and blocking performance can be achieved. The pure water permeability is preferably not less than 1,200 $L/m^2/hr$ and not more than 18,000 $L/m^2/hr$, and more preferably not less than 3,000 $L/m^2/hr$ and not more than 12,000 $L/m^2/hr$.

In the porous membrane according to the present embodiment, the internal porosity of the overall membrane is preferably 50% or more from a viewpoint of water permeation performance, and is preferably 90% or less from a viewpoint of strength. The internal porosity of the overall membrane is more preferably not less than 55% and not more than 85%, and even more preferably not less than 65% and not more than 80%.

The inventors found that filtration performance is influenced by factors including the internal porosity of a topmost layer for which a difference cannot be detected in measurement of internal porosity of the overall membrane. More specifically, the inventors found that filtration performance is improved by controlling a ratio of the internal porosity in the thickness up to 0.12% of the membrane thickness from the topmost surface of the surface at the filtration feed side relative to the surface porosity of the surface at the filtration feed side or by controlling a product of the internal porosity in the thickness up to 0.12% of the membrane thickness from the topmost surface of the surface at the filtration feed side multiplied by the surface porosity of the surface at the filtration feed side.

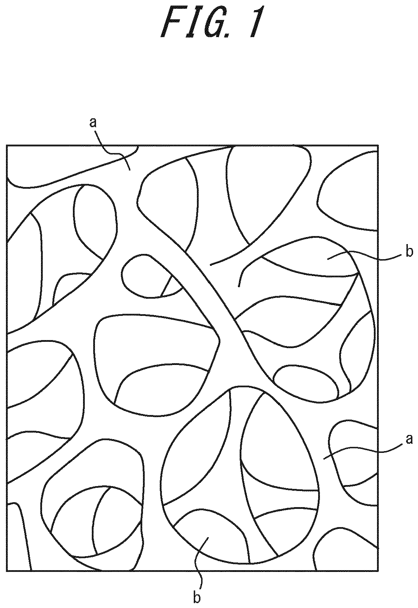

It is desirable for the porous membrane (preferably a porous hollow fiber membrane) to have a three-dimensional network structure. The term "three-dimensional network structure" as used in the present application refers to a structure such as illustrated schematically in FIG. 1. For example, thermoplastic resin a is joined to form a network and thereby form void parts b. Lumps of resin having what is referred to as a spherulite structure are rarely observed in the three-dimensional network structure. The void parts b in the three-dimensional network structure are surrounded by the thermoplastic resin a and are preferably in communication with one another. Most of the used thermoplastic resin forms a three-dimensional network structure that is capable of contributing to strength of the porous membrane (preferably a hollow fiber membrane) and thus enables formation of a support layer having high strength. In addition, chemical resistance improves. Although the reason for improvement of chemical resistance is not clear, it is thought that since a large amount of thermoplastic resin forms a network that can contribute to strength, the strength of the overall layer is not significantly affected even when part of the network is corroded by a chemical.

The porous membrane (preferably a porous hollow fiber membrane) may have a single-layer structure or may have a multilayer structure including two or more layers. A layer that includes a surface at a filtration feed side is referred to as layer (A), whereas a layer that includes a surface at a filtrate side is referred to as layer (B).

For example, functions are assigned such that the layer (A) is used as a so-called blocking layer and is caused to display a function of blocking membrane permeation by foreign matter contained in liquid to be treated (source water) through the small surface pore diameter thereof, whereas the layer (B) is used as a so-called support layer that has a function of ensuring high mechanical strength while also reducing water permeability as little as possible. Assignment of functions of the layer (A) and the layer (B) is not limited to that described above. In the porous membrane according to the present embodiment, just one surface may be the surface at the filtration feed side.

The following provides a description for the case of a two-layer structure in which the layer (A) is a blocking layer and the layer (B) is a support layer. The thickness of the layer (A) is preferably not less than 1/100 and less than 40/100 of the membrane thickness. Through the layer (A) having a comparatively large thickness in this manner, the porous membrane can be used even in a case in which the source water contains insoluble matter such as sand or aggregates. This is because the surface pore diameter does not change even when the porous membrane is worn down to a certain extent. A thickness that is within this range makes it possible to balance the desired blocking performance with high water permeation performance. The thickness of the layer (A) is more preferably not less than 2/100 and not more than 30/100 of the membrane thickness. The thickness of the layer (A) is preferably not less than 1 $\mu$m and not more than 100 $\mu$m, and more preferably not less than 2 $\mu$m and not more than 80 $\mu$m.

The following describes a specific production method for a case in which the porous membrane is a hollow fiber membrane.

The production method of the porous membrane (preferably a porous hollow fiber membrane) according to the present embodiment is preferably a method including a step of extruding a melt-kneaded product containing a thermoplastic resin, an organic liquid, and an inorganic fine powder from a spinneret having a circular ring-shaped discharge port so as to form a melt-kneaded product with a hollow fiber shape and a step of coagulating the hollow fiber-shaped melt-kneaded product and subsequently extracting and removing the organic liquid and the inorganic fine powder to produce a porous membrane (preferably a porous hollow fiber membrane). The melt-kneaded product may be formed of two components that are a thermoplastic resin and a solvent or may be formed of three components that are a thermoplastic resin, an inorganic fine powder, and a solvent.

The thermoplastic resin that is used in the production method of the porous membrane (preferably a porous hollow fiber membrane) according to the present embodiment is a resin that has elasticity without displaying plasticity at normal temperature but that displays plasticity and becomes shapeable upon appropriate heating. Moreover, the thermoplastic resin is a resin that returns to its original elastic body when the temperature thereof decreases through cooling and that does not experience chemical change of molecular structure or the like during this cooling (for example, refer to "Encyclopaedia Chimica 6th Reduced Edition, edited by the Editorial Committee of Encyclopedia Chimica, Kyoritsu Shuppan Co., Ltd., pp. 860 and 867, 1963").

Examples of thermoplastic resins that can be used include resins described in the "Thermoplastics" section (pp. 829-882) in "12695 Chemical Products" (The Chemical Daily Co., Ltd., 1995) and resins described in pages 809 to 810 of "Handbook of Chemistry, Applied Chemistry Section, Revised 3rd Edition" (edited by The Chemical Society of Japan, Maruzen, 1980). Specific examples of names of thermoplastic resins that may be used include polyolefins such as polyethylene and polypropylene, fluororesins such as polyvinylidene fluoride, ethylene-vinyl alcohol copolymer, polyamide, polyether imide, polystyrene, polysulfone, polyvinyl alcohol, polyphenylene ether, polyphenylene sulfide, cellulose acetate, and polyacrylonitrile. Of these examples, a crystalline thermoplastic resin such as a polyolefin, a fluororesin (polyvinylidene fluoride, etc.), an ethylene-vinyl alcohol copolymer, or a polyvinyl alcohol having crystallinity can suitably be used from a perspective of exhibiting strength. A polyolefin, a fluororesin such as polyvinylidene fluoride, or the like can more suitably be used due to having high water resistance as a result of being hydrophobic and being expected to have durability during filtration of typical water-based liquids. More specifically, the fluororesin preferably includes, as a main component, one or a combination of two or more of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins, and is more preferably formed of only one of these resins or a combination of two or more of these resins. Polyvinylidene fluoride can particularly suitably be used as the fluororesin due to having excellent chemical durability in terms of chemical resistance, etc. The polyvinylidene fluoride may be a vinylidene fluoride homopolymer or may be a vinylidene fluoride copolymer in which the ratio of vinylidene fluoride is 50 mol% or more. The vinylidene fluoride copolymer may be a copolymer of vinylidene fluoride with one or more monomers selected from the group consisting of tetrafluoroethylene, hexafluoropropylene, chlorotrifluoroethylene, and ethylene. The polyvinylidene fluoride is particularly preferably a vinylidene fluoride homopolymer.

It is desirable for the concentration of the thermoplastic resin in the melt-kneaded product to be from 30 mass% to 48 mass%. The concentration is preferably from 32 mass% to 45 mass%. It is easy to ensure mechanical strength when the concentration is 30 mass% or more, whereas water permeation performance is not reduced when the concentration is 48 mass% or less.

Moreover, in a case in which the porous membrane is a membrane having a two-layer structure, it is desirable for the concentration of the thermoplastic resin in a melt-kneaded product for the layer (B) to be from 34 mass% to 48 mass%. The concentration is more preferably from 35 mass% to 45 mass%.

The concentration of the thermoplastic resin in a melt-kneaded product for the layer (A) is preferably not less than 10 mass% and not more than 35 mass%, and more preferably not less than 12 mass% and less than 35 mass%. A balance of surface pore diameter and mechanical strength can be achieved when the concentration is 10 mass% or more, whereas reduction of water permeation performance does not occur when the concentration is 35 mass% or less.

The organic liquid serves as a latent solvent for the thermoplastic resin that is used in the present embodiment. In the present embodiment, the term "latent solvent" refers to a solvent that causes almost no dissolution of the thermoplastic resin at room temperature (25°C) but that can dissolve the thermoplastic resin at a higher temperature than room temperature. The organic liquid is not necessarily required to be a liquid at normal temperature so long as it is in a liquid state at a temperature at which it is melt-kneaded with the thermoplastic resin.

Examples of organic liquids that can be used in a case in which the thermoplastic resin is polyethylene include: phthalic acid esters such as dibutyl phthalate, diheptyl phthalate, dioctyl phthalate, di(2-ethylhexyl) phthalate, diisodecyl phthalate, and ditridecyl phthalate; sebacic acid esters such as dibutyl sebacate; adipic acid esters such as dioctyl adipate; trimellitic acid esters such as trioctyl trimellitate; phosphoric acid esters such as tributyl phosphate and trioctyl phosphate; glycerin esters such as propylene glycol dicaprate and propylene glycol dioleate; paraffins such as liquid paraffin; and mixtures thereof.

Examples of organic liquids that can be used in a case in which the thermoplastic resin is polyvinylidene fluoride include: phthalic acid esters such as dimethyl phthalate, diethyl phthalate, dibutyl phthalate, dicyclohexyl phthalate, diheptyl phthalate, dioctyl phthalate, and di(2-ethylhexyl) phthalate; sebacic acid esters such as dibutyl sebacate; adipic acid esters such as dioctyl adipate; benzoic acid esters such as methyl benzoate and ethyl benzoate; phosphoric acid esters such as triphenyl phosphate, tributyl phosphate, and tricresyl phosphate; ketones such as $\gamma$-butyrolactone, ethylene carbonate, propylene carbonate, cyclohexanone, acetophenone, and isophorone; and mixtures thereof.

Examples of inorganic fine powders that may be used include silica, alumina, titanium oxide, zirconium oxide, and calcium carbonate. In particular, fine powder silica having an average primary particle diameter of not less than 3 nm and not more than 500 nm is preferable. The average primary particle diameter is more preferably not less than 5 nm and not more than 100 nm. Hydrophobic silica fine powder having low tendency to aggregate and good dispersibility is more preferable, and hydrophobic silica having an MW (methanol wettability) value of 30 volume% or more is even more preferable. The term "MW value" as used here refers to a value for a volume% of methanol that causes complete wetting of the powder. Specifically, the MW value is determined by placing the silica in pure water, adding methanol below the liquid surface under stirring, and determining the volume% of methanol in the aqueous solution when 50 mass% of the silica has precipitated. The "average primary particle diameter of the inorganic fine powder" referred to above is a value determined through analysis of an electron micrograph. Specifically, a group of inorganic fine powder particles are first pretreated by a method in ASTM D3849. The diameters of 3,000 to 5,000 particles recorded in a transmission electron micrograph are then measured, and these diameters are arithmetically averaged so as to calculate the average primary particle diameter of the inorganic fine powder.

The additive amount of the inorganic fine powder is preferably not less than 5 mass% and not more than 50 mass% in terms of mass ratio of the inorganic fine powder among the melt-kneaded product. The additive amount is more preferably not less than 10 mass% and not more than 40 mass%. The effect of kneading the inorganic fine powder can be sufficiently displayed when the ratio of the inorganic fine powder is 5 mass% or more, whereas stable spinning can be performed when the ratio of the inorganic fine powder is 40 mass% or less.

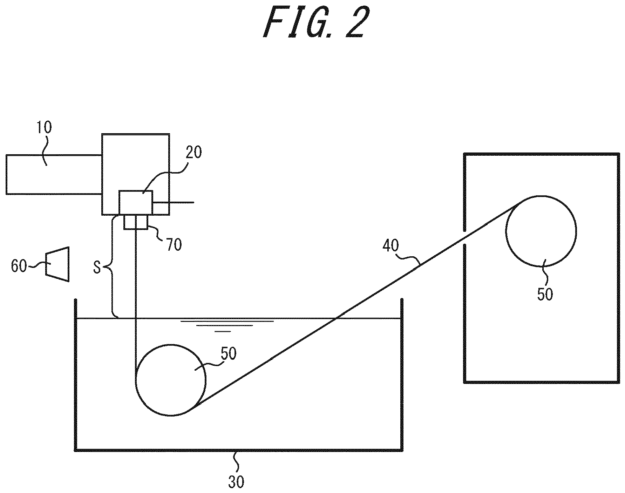

The melt-kneading can be performed using a typical melt-kneading means such as an extruder. Although the following describes a case in which an extruder is used, the means of melt-kneading is not limited to an extruder. One example of a production apparatus that can be used to implement the production method of the present embodiment is illustrated in FIG. 2.

A porous hollow fiber membrane production apparatus illustrated in FIG. 2 includes an extruder 10, a nozzle 20 for hollow fiber formation, a coagulation bath 30 that holds a solution for coagulating a membrane production stock solution, and a plurality of rollers 50 for conveying and taking up a porous hollow fiber membrane 40. 60 is a suction device, and 70 is a high-temperature vessel. A space S illustrated in FIG. 2 is a free traveling part through which membrane production stock solution discharged from the nozzle 20 for hollow fiber formation passes before reaching the solution in the coagulation bath 30.

The nozzle 20 for hollow fiber formation, which has one or more concentrically disposed circular ring-shaped discharge ports, is attached to the tip of the extruder 10. A melt-kneaded product is extruded by the extruder 10 and discharged from the nozzle 20 for hollow fiber formation. In the case of producing a membrane having a multilayer structure, a method in which a nozzle 20 for hollow fiber formation having two or more circular ring-shaped discharge ports is attached to the tips of extruders 10 and in which melt-kneaded products are supplied and extruded by different extruders 10 from the respective circular ring-shaped discharge ports or a method in which one of the multiple layers is produced and is subsequently coated with the remaining layer(s) may be adopted. For example, the former of these production methods using different extruders can obtain an extrudate in a hollow fiber form having a multilayer structure by merging and overlapping the supplied melt-kneaded products at the discharge ports. In this case, melt-kneaded products of different compositions can be extruded from circular ring-shaped discharge ports that are adjacent to each other to obtain a multilayer membrane having different pore diameters in layers that are adjacent to each other. The term "different compositions" refers to a case in which constituents of the melt-kneaded products are different or a case in which constituents of the melt-kneaded products are the same but the ratios thereof are different. Even in the case of the same type of thermoplastic resin, the constituents are considered to be different in a situation in which there is a clear difference in terms of molecular weight or molecular weight distribution. The merging position of the melt-kneaded products having different compositions may be a lower end face of the nozzle 20 for hollow fiber formation or may be a different position to the lower end face of the nozzle 20 for hollow fiber formation.

In extrusion of a melt-kneaded product from a circular ring-shaped discharge port, it is preferable to perform discharge such that a spinneret discharge parameter R (1/sec) is a value of not less than 10 and not more than 1,000 because this results in high productivity and spinning stability, and yields an even stronger membrane. The term "spinneret discharge parameter R" as used here refers to a value obtained by dividing the discharge linear velocity V (m/sec) by the slit width d (m) of the discharge port. The discharge linear velocity V (m/sec) is a value obtained by dividing the discharge volume per time ($m^3$/sec) of the melt-kneaded product by the cross-sectional area ($m^2$) of the discharge port. When R is 10 or more, spinning is stably achieved with good productivity and without problems such as the pulsation of the thread diameter of the hollow extrudate. Moreover, when R is 1,000 or less, it is possible to maintain sufficiently high breaking elongation of the obtained porous hollow fiber membrane, which is one important aspect of strength. The breaking elongation is the ratio of elongation relative to the original length when the membrane is pulled in a longitudinal direction.

In the case of a porous hollow fiber membrane having a multilayer structure, a value obtained by dividing the discharge linear velocity V of a layered melt-kneaded product after resin merging by the slit width d of the discharge port is defined as the spinneret discharge parameter R. The range for R is more preferably not less than 50 and not more than 1,000.

The hollow fiber-shaped melt-kneaded product discharged from the discharge port is coagulated by passing through a coolant such as air or water. Depending on the target porous hollow fiber membrane, the discharged melt-kneaded product is caused to pass through the aforementioned free traveling part S, which is formed of an air layer, and then caused to pass through the coagulation bath 30 containing water or the like. Specifically, the free traveling part S is a part from the discharge port of the nozzle 20 for hollow fiber formation to the water surface of the coagulation bath 30. A vessel such as a tube may be used in the free traveling part S from the discharge port as necessary. The melt-kneaded product that has passed through the coagulation bath 30 is then wound up into a skein or the like as necessary.

In particular, the melt-kneaded product is preferably caused to pass through a high-temperature vessel having a tube shape or the like for 0.015 seconds or more straight after the discharge port. Performing this passing for 0.015 seconds or more can increase the surface porosity and the internal porosity in proximity to the surface because solvent vapor that has accumulated inside of the high-temperature vessel inhibits closing of the surface (i.e., of pores) and because absorption of solvent vapor reduces the resin concentration in a surface layer of the melt-kneaded product. This passing is preferably performed for 0.18 seconds or less in order to control the pore diameter at the surface. The passing time is even more preferably not less than 0.018 seconds and not more than 0.14 seconds, and even more preferably not less than 0.021 seconds and not more than 0.12 seconds.

A tube is generally used for the whole of a free traveling part in nonsolvent induced phase separation, but this is to cause progression of phase separation through moisture in the free traveling part, whereas, in the present disclosure, this is based on a new finding that internal porosity relative to surface porosity at the surface is controlled through solvent vapor.

The set temperature of the high-temperature vessel is preferably from (T - 60)°C to (T + 60)°C relative to the discharge temperature T of the melt-kneaded product. The set temperature is more preferably from (T - 50)°C to (T + 50)°C. When the set temperature is (T - 60)°C or higher, the effect of solvent vapor described above can be sufficiently displayed. Although there is no specific reason, the set temperature is preferably (T + 60)°C or lower for reasons such as preventing degradation of the resin kneaded product through excessive raising of the set temperature.

The time required for the melt-kneaded product to pass through the free traveling part S, which is referred to as the free traveling time, is desirably 0.20 seconds or more. When the free traveling time is 0.20 seconds or more, compressive strength can be further increased because polymer molecules become oriented in the free traveling part. It is more desirable that the free traveling time is not less than 0.20 seconds and not more than 2.0 seconds. A free traveling time of 2.0 seconds or less enables stable production. The free traveling time is desirably not less than 0.30 seconds and not more than 1.5 seconds, and is even more preferably not less than 0.40 seconds and not more than 1.1 seconds.

In the free traveling part, it is desirable that cooling air is blown against the melt-kneaded product at 0.80 m/sec or less in a direction perpendicular to the discharge direction using a suction device or the like. Although the reason for this is not certain, it is presumed that solvent vapor remains at the surface of the melt-kneaded product to an appropriate degree with cooling air of 0.80 m/sec or less, and thus the solvent vapor inhibits closing of the surface (i.e., of pores) and reduces resin concentration in a surface layer of the melt-kneaded product through absorption of the solvent vapor, thereby increasing surface porosity and internal porosity in proximity to the surface.

In the hollow fiber-shaped product present after coagulation, a polymer-rich partial phase and an organic liquid-rich partial phase are present as finely divided portions. Note that in a case in which an inorganic fine powder is added, for example, when fine powder silica is used as this inorganic fine powder, the fine powder silica becomes concentrated in the organic liquid-rich partial phase. When the organic liquid and the inorganic fine powder are extracted and removed from this hollow fiber-shaped product, the organic liquid-rich phase portion becomes internal pores. Accordingly, a porous hollow fiber membrane can be obtained.

The extraction and removal of the organic liquid and the extraction and removal of the inorganic fine powder can be performed at the same time in a case in which extraction and removal using the same solvent is feasible. In general, the organic liquid and the inorganic fine powder are extracted and removed separately to each other.

The extraction and removal of the organic liquid are performed using a liquid suitable for extraction that is miscible with the organic liquid without dissolving or denaturing the thermoplastic resin that is used. Specifically, the extraction and removal of the organic liquid can be performed through contact by an approach such as immersion. The liquid is preferably volatile because this facilitates removal of the liquid from the hollow fiber membrane after extraction. Examples of the liquid include alcohols and methylene chloride. When the organic liquid is water-soluble, water may be used as the extractant.

The extraction and removal of the inorganic fine powder are usually performed using a water-based liquid. When the inorganic fine powder is silica, for example, the silica is first converted to a silicate by contact with an alkaline solution, and then the silicate can be extracted and removed by contact with water.

The extraction and removal of the organic liquid and the extraction and removal of the inorganic fine powder may be performed in any order. When the organic liquid is immiscible with water, it is preferable to first perform the extraction and removal of the organic liquid, followed by the extraction and removal of the inorganic fine powder. Since the organic liquid and the inorganic fine powder are normally present together in a miscible form in the organic liquid-rich partial phase, this is advantageous because it enables smooth progression of the extraction and removal of the inorganic fine powder.

By extracting and removing the organic liquid and the inorganic fine powder from the coagulated porous hollow fiber membrane in this manner, it is possible to obtain a porous hollow fiber membrane.

The hollow fiber membrane after coagulation can be stretched in the longitudinal direction of the porous hollow fiber membrane with a stretch ratio in a range not exceeding 3 times at any stage (i) before the extraction and removal of the organic liquid and the inorganic fine powder, (ii) after the extraction and removal of the organic liquid and before the extraction and removal of the inorganic fine powder, (iii) after the extraction and removal of the inorganic fine powder and before the extraction and removal of the organic liquid, and (iv) after the extraction and removal of the organic liquid and the inorganic fine powder. In general, the stretching of a hollow fiber membrane in a longitudinal direction improves water permeation performance but reduces pressure resistance performance (breaking strength and compressive strength), thus often results in the membrane obtained after stretching lacking practical strength. However, the porous hollow fiber membrane obtained by the production method of the present embodiment has high mechanical strength. Accordingly, stretching can be performed with a stretch ratio of not less than 1.1 times and not more than 3.0 times. This stretching improves water permeation performance of the porous hollow fiber membrane. The term "stretch ratio" as used here refers a value obtained by dividing the hollow fiber length after stretching by the hollow fiber length before stretching. For example, in a case in which a porous hollow fiber membrane having a hollow fiber length of 10 cm is stretched to a hollow fiber length of 20 cm, the stretch ratio is 2 times according to the following formula.

$$20 \text{ cm} \div 10 \text{ cm} = 2$$

It is desirable that the stretching is performed with a space temperature of not lower than 0°C and not higher than 160°C. A space temperature of higher than 160°C is not preferable because it results in large stretching marks and reduction of elongation at break and water permeation performance, whereas a space temperature of 0°C or lower is not practical as there is a high probability of breaking during stretching. The space temperature during the stretching step is more preferably not lower than 10°C and not higher than 140°C, and even more preferably not lower than 20°C and not higher than 100°C.

In the present disclosure, it is preferable that the stretching is performed with respect to a hollow fiber membrane that contains the organic liquid. A hollow fiber membrane that contains the organic liquid is less likely to break during stretching than a hollow fiber membrane that does not contain the organic liquid. Moreover, stretching of a hollow fiber membrane that contains the organic liquid makes it possible to increase contraction of the hollow fiber membrane after stretching, and thus increases the degree of freedom in design when setting the contraction ratio after stretching.

Moreover, it is preferable that stretching is performed with respect a hollow fiber membrane that contains the inorganic fine powder. A hollow fiber membrane that contains the inorganic fine powder is less likely to be squashed flat during stretching due to the hardness of the hollow fiber membrane that results from the presence of the inorganic fine powder contained in the hollow fiber membrane. Moreover, the presence of the inorganic fine powder can prevent the pore diameter in the finally obtained hollow fiber membrane becoming too small and the fiber diameter becoming too thin.

In the present disclosure, it is more desirable for stretching to be performed with respect to a hollow fiber membrane that contains both the organic liquid and the inorganic fine powder.

For the reasons set forth above, stretching of a hollow fiber membrane that contains either one of the organic liquid and the inorganic fine powder is preferable compared to stretching of a hollow fiber membrane after completion of extraction, and stretching of a hollow fiber membrane that contains both the organic liquid and the inorganic fine powder is more preferable compared to stretching of a hollow fiber membrane that contains either one of the organic liquid and the inorganic fine powder.

Moreover, a method in which extraction is performed with respect to a hollow fiber membrane that has been stretched is advantageous in terms that the extraction solvent can easily infiltrate to an inner part of the hollow fiber membrane because the stretching increases voids at the surface and inside of the hollow fiber membrane. Furthermore, a method in which extraction is performed after a step of stretching and then contraction is advantageous because, as described below, a hollow fiber membrane having a low tensile modulus and high bendability is obtained, which, in a case in which extraction is then performed in liquid flow, facilitates shaking of the hollow fiber membrane by the liquid flow and increases an effect of agitation, thereby enabling high efficiency extraction in a short time.

In the present disclosure, it is possible to ultimately obtain a hollow fiber membrane having low tensile modulus through the inclusion of a step of stretching and then contracting the hollow fiber membrane. Note that the phrase "low tensile modulus" as used here means that a fiber is easily extended through little force and then returns to its original state when the force is removed. A low tensile modulus means that the hollow fiber membrane is not squashed flat, easily bends, and is easily shaken by water flow during filtration. As a result of a fiber being shaken in accordance with water flow without bending thereof being fixed, a layer of contaminants that becomes attached to and deposited on the membrane surface can easily be stripped off without growing, and a high water filtration rate can be maintained. Furthermore, when a fiber is forcefully shaken by flushing or air scouring, this increases the shaking and enhances the effect of washing recovery.

With regards to the degree of fiber length contraction in a situation in which contraction is performed after stretching, it is desirable that the fiber length contraction ratio relative to the increase of fiber length due to stretching is within a range of not less than 0.3 and not more than 0.9. For example, in a situation in which a 10 cm fiber is stretched to 20 cm and is subsequently contracted to 14 cm, the fiber length contraction ratio is 0.6 according to the following formula.

$$\text{Fiber length contraction ratio} = \{(\text{Maximum fiber length during stretching}) - (\text{Fiber length after contraction})\}/[(\text{Maximum fiber length during stretching}) - (\text{Original fiber length})] = (20 - 14)/(20 - 10) = 0.6$$

A fiber length contraction ratio of 0.9 or more is not preferable because water permeation performance tends to decrease, whereas a fiber length contraction ratio of less than 0.3 is not preferable because the tensile modulus tends to increase. In the present disclosure, the fiber length contraction ratio is more preferably within a range of not less than 0.50 and not more than 0.85.

Moreover, by adopting a step of stretching the hollow fiber membrane to the maximum fiber length during stretching and subsequently contracting the hollow fiber membrane, the hollow fiber membrane that is ultimately obtained will not break even when, during use, it is stretched up to the maximum fiber length during stretching.

When the stretch ratio is taken to be X and the fiber length contraction ratio relative to the increase of fiber length due to stretching is taken to be Y, a ratio Z that represents the degree of assurance of breaking elongation can be defined by the following formula.

$$Z = \text{(Maximum fiber length during stretching} - \text{Fiber length after contraction)/Fiber length after contraction} = (XY - Y)/(X + Y - XY)$$

Z is preferably not less than 0.2 and not more than 1.5, and more preferably not less than 0.3 and not more than 1.0. Assurance of breaking elongation decreases when Z is too small, whereas there is less water permeation performance in exchange for increased possibility of breaking during stretching when Z is too large.

Moreover, the inclusion of a step of stretching and then contraction in the production method according to the present disclosure means that with regards to tensile breaking elongation, breaking at low elongation is highly unlikely, and a narrower distribution of tensile breaking elongation can be achieved.

It is desirable in terms of contraction time and physical properties that the space temperature in the step of stretching and then contraction is within a range of not lower than 0°C and not higher than 160°C. A temperature of lower than 0°C is not preferable because contraction becomes time consuming and is not practical, whereas a temperature exceeding 160°C is not preferable because it reduces breaking elongation and lowers water permeation performance.

In the present disclosure, it is preferable that crimping of the hollow fiber membrane is performed in the contraction step. This makes it possible to obtain a hollow fiber membrane having a high degree of crimping without squashing or damage thereof.

Hollow fiber membranes generally have a straight tube form without bends. Consequently, when hollow fiber membranes are bundled together as a filtration module, they are likely to form a fiber bundle having a low void ratio without gaps between the hollow fibers. In contrast, the use of hollow fiber membranes having a high degree of crimping enables the formation of a fiber bundle having a high void ratio because bending of the individual fibers widens intervals between the hollow fiber membranes, on average. Moreover, particularly during use with external pressure, a filtration module formed of hollow fiber membranes having a low degree of crimping experiences reduction of voids in the fiber bundle, increased flow resistance, and lack of effective transmission of filtration pressure to the center of the fiber bundle. Furthermore, in a situation in which backwashing or flushing is performed in order to strip filtration sediment from the hollow fiber membranes, the effect of washing is small in an inner part of the fiber bundle. In the case of a fiber bundle that is formed of hollow fiber membranes having a high degree of crimping, the void ratio is large, gaps between hollow fiber membranes are maintained even in external pressure filtration, and channeling tends not to occur.

In the present disclosure, the degree of crimping is preferably within a range of not less than 1.5 and not more than 2.5. A degree of crimping of 1.5 or more is preferable for the reasons set forth above, whereas a degree of crimping of less than 2.5 can inhibit reduction of filtration area per volume.

The method of crimping of the hollow fiber membrane may be a method in which, in the step of stretching and then contraction, the hollow fiber membrane is sandwiched between a pair of gear rolls having periodic irregularities or a pair of sponge belts having irregularities, for example, and is taken up while being caused to contract.

Moreover, in the present disclosure, the stretching is preferably performed using a take up machine including a pair of continuous belts that are in opposition. In this case, take up machines are used at an upstream side and a downstream side of the stretching, and the hollow fiber membrane is sandwiched between opposing belts in each of the take up machines and is fed through movement of both belts at the same speed in the same direction. Moreover, in this case, stretching is preferably performed by adopting a higher fiber feed rate at the downstream side than at the upstream side. By performing stretching in this manner, stretching can be performed without yielding to stretching tension and without slipping during stretching, and squashing of the fiber into a flat form can be prevented.

The continuous belt is preferably a belt for which an inner side that comes into contact with a drive roll is formed of a high elasticity belt such as a fiber reinforced belt and for which a surface at an outer side that comes into contact with the hollow fiber membrane is formed of an elastic body. Moreover, it is more preferable that the compression modulus of the elastic body in a thickness direction is not less than 0.1 MPa and not more than 2 MPa and that the thickness of the elastic body is not less than 2 mm and not more than 20 mm. In particular, it is preferable in terms of chemical resistance and heat resistance for the elastic body at the outer surface to be silicone rubber.

The membrane that has been stretched may be heat treated as necessary so as to increase compressive strength. It is desirable for the heat treatment to be performed at not lower than 80°C and not higher than 160°C. A temperature of 160°C or lower can inhibit reduction of breaking elongation and water permeation performance, whereas a temperature of 100°C or higher can increase compressive strength. Performing the heat treatment with respect to the hollow fiber membrane after extraction is complete is desirable in terms that this reduces change of fiber diameter, internal porosity, pore diameter, and water permeation performance.

In a case in which PVDF (polyvinylidene fluoride) is used as the thermoplastic resin, it is necessary to appropriately select a solvent for PVDF in order to achieve a balance of both high surface porosity and high compressive strength. Firstly, examples of methods for increasing surface porosity include a method of reducing the concentration of PVDF and a method of raising the temperature of a fluid for hollow part formation as previously described. When using the method of producing a membrane with reduced PVDF concentration, it is necessary to select a solvent that makes it possible to achieve high surface porosity and small pore diameter because this method also increases the pore diameter. A parameter P indicated below is a relationship formula for three-dimensional solubility parameters of PVDF and three-dimensional solubility parameters of the solvent. This parameter P evaluates solubility of PVDF and the solvent. The right-hand side three-dimensionally represents the solubility envelope of Hansen solubility parameters and quantitatively represents a distance from the three-dimensional solubility parameters ($\sigma$dp, $\sigma$pp, and $\sigma$hp) of PVDF to the three-dimensional solubility parameters ($\sigma$dm, $\sigma$pm, and $\sigma$hm) of the solvent.

$$P = ((\sigma dm - \sigma dp)^2 + (\sigma pm - \sigma pp)^2 + (\sigma hm - \sigma hp)^2)^{0.5}$$

[In the formula, $\sigma$dm and $\sigma$dp represent dispersion force terms of the solvent and polyvinylidene fluoride, respectively; $\sigma$pm and $\sigma$pp represent dipole bonding force terms of the solvent and polyvinylidene fluoride, respectively; and $\sigma$hm and $\sigma$hp represent hydrogen bonding terms of the solvent and polyvinylidene fluoride, respectively.]

Note that the concept described above is not limited to PVDF.

In the case of a porous membrane having a two-layer structure, the parameter P between the solvent and PVDF for use in the preparation of a melt-kneaded product B forming the layer (B) is preferably larger than 7.88, and more preferably from 7.88 to 10.0. When this value is 7.88 or larger, reduction of water permeability can be suppressed.

The parameter P between the solvent and PVDF used in preparation of a melt-kneaded product A forming the layer (A) is preferably 7.88 or less, more preferably from 0 to 7.88, and even more preferably from 1.00 to 7.88. When this value is 7.88 or smaller, a high surface porosity and a small pore diameter can be achieved.

EXAMPLES

The following provides a more specific description of the present embodiment through examples and comparative examples. However, the present embodiment is not limited to only the following examples.

Note that measurement methods used in the present embodiment are as follows.

All of the measurements described below were performed at 25°C unless otherwise specified. The following describes evaluation methods and then describes production methods and evaluation results for the examples and comparative examples.

Moreover, compositions, production conditions, and various aspects of performance of membranes are shown in Tables 1 and 2.

(1) Measurement of external diameter, internal diameter, and membrane thickness (mm)

A hollow fiber membrane was perpendicularly sliced with a razor or the like at 15-cm intervals in the longitudinal direction of the membrane, and the major axis and minor axis of an internal diameter and the major axis and minor axis of an external diameter in the cross section were measured using a microscope. The internal diameter and the external diameter were calculated by the following formulae (2) and (3), and the membrane thickness was calculated as a value obtained by subtracting the calculated internal diameter from the calculated external diameter and then dividing by 2. Measurements were made at 20 points, and average values for these 20 points were taken to be the internal diameter, the external diameter, and the membrane thickness under those conditions.

[Math. 1]

$$\text{Internal diameter [mm]} = \frac{\text{Internal major axis [mm]} + \text{Internal minor axis [mm]}}{2} \quad ...(2)$$

[Math. 2]

$$\text{External diameter [mm]} = \frac{\text{External major axis [mm]} + \text{External minor axis [mm]}}{2} \quad ...(3)$$

(2) Pure water permeability (L/m$^2$/hr)

A hollow fiber membrane was immersed in 50 mass% ethanol aqueous solution for 30 minutes and was then immersed in water for 30 minutes to wet the hollow fiber membrane. One end of the wet hollow fiber membrane, which was of approximately 10 cm in length, was sealed and an injection needle was inserted into the hollow part at the other end. Pure water of 25°C was injected into the hollow part with a pressure of 0.1 MPa from the injection needle. The amount of pure water that permeated to the external surface was measured, and the pure water permeation flux was determined by the following formula. Note that the membrane effective length is the net membrane length exclusive of the part where the injection needle was inserted. Moreover, 10 measurements were made, and the average value thereof was taken to be the pure water permeation rate under each condition.

[Math. 3]

$$\text{Pure water permeability [L/m}^2\text{/hr]} = \frac{60 \text{ [min/hr]} \times \text{Amount of permeated water [L]}}{\pi \times \text{Membrane internal diameter [m]} \times \text{Membrane effective length [m]} \times \text{Measurement time [min]}} \quad \cdots (4)$$

(3) Breaking strength (MPa) and breaking elongation (%)

Load and displacement during tensing and breaking were measured under the following conditions.

Sample: Wet hollow fiber membrane prepared by method in (2)
Measurement instrument: Instron tensile testing machine (AGS-X produced by Shimadzu Corporation)
Distance between chucks: 5 cm
Tensing rate: 20 cm/min

The breaking strength and breaking elongation were determined by the following formulae.

[Math. 4]

$$\text{Breaking strength [kgf/cm}^2\text{]} = \frac{\text{Load at breaking [kgf]}}{\text{Membrane cross-sectional area [cm}^2\text{]}}$$

$$\text{Breaking elongation [\%]} = \frac{\text{Displacement at breaking [cm]}}{5 \text{ [cm]}} \times 100$$

The membrane cross-sectional area was determined by the following formula.

[Math. 5]

$$\text{Membrane cross-sectional area [cm}^2\text{]} = \pi \times \left\{ \left( \frac{\text{Membrane external diameter [cm]}}{2} \right)^2 - \left( \frac{\text{Membrane internal diameter [cm]}}{2} \right)^2 \right\}$$

(4) Internal porosity of overall membrane

The internal porosity of an overall membrane was determined by the following formula.

$$\text{Internal porosity (overall membrane) \% } = 100 \times \text{(Wet membrane weight}$$
$$\text{[g] } - \text{ Dry membrane weight [g])/Water specific gravity [g/cm}^3\text{]/(Membrane}$$
$$\text{volume [cm}^3\text{])}$$

The term "wet membrane" as used here refers to a membrane in which pores are filled with pure water but that does not contain pure water in a hollow part thereof. Specifically, a wet membrane can be obtained by immersing a sample membrane of 10 cm to 20 cm in length in ethanol so as to fill up pores with ethanol, subsequently immersing the sample membrane in pure water 4 or 5 times so as to sufficiently purge the inside of the pores with pure water, subsequently thoroughly shaking the sample membrane about 5 times while holding one end of the hollow fiber by hand, and then thoroughly shaking the sample membrane about 5 times while holding the other end of the hollow fiber by hand so as to remove water from inside of the hollow part. Moreover, a dry membrane can be obtained by, after weight measurement of the above-described wet membrane, drying the wet membrane in an oven at 60°C, for example, until the membrane reaches a constant weight.

The membrane volume can be determined by the following formula.

$$\text{Membrane volume [cm}^3\text{] } = \pi \times \{(\text{External diameter [cm]/2)}^\wedge 2 - (\text{Internal diameter [cm]/2)}^\wedge 2\} \times \text{Membrane length [cm]}$$

Note that a plurality of membranes may be used in a case in which the weight of one membrane is so small that it results in a large weight measurement error.

(4) Method for determining boundary between layers in multilayer structure

A cross-section of a membrane was observed at an accelerating voltage of 3 kV using an electron microscope SU8000 series produced by Hitachi, Ltd. In the present examples and comparative examples, an image was recorded at ×1,000 in proximity to a boundary between layers. In a situation in which it is possible to identify a boundary line between layers in a recorded image, the boundary line is taken to be the boundary between the layers. For porous hollow fiber membranes in the present examples and comparative examples, it was possible to identify a boundary line, and thus this boundary line was taken to be the boundary between layers.

In a situation in which a boundary between layers cannot be identified by the method described above, the boundary can be determined by the following method. For example, the following describes a method for determining a boundary between a layer (A) and a layer (B) in a porous hollow fiber membrane having a two-layer structure. The following method is for a case in which the layer (A) is a blocking layer and the layer (B) is a support layer.

The electron microscope described above was used to photograph a cross-section of a hollow fiber membrane. A photograph in which the shapes of at least 20 pores could be confirmed was used. In order to observe the entire cross-section, a plurality of images are used. Measurements were performed at ×5,000 in the present examples and comparative examples. The electron microscope sample of the cross-section was obtained by slicing a membrane sample frozen in ethanol into round sections.

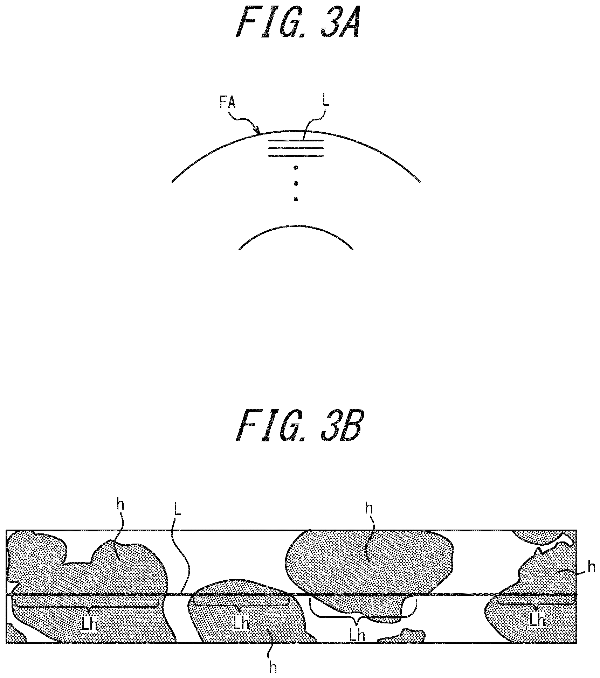

Commercially available image analysis software WinROOF 6.1.3A was used to stretch a line L equidistant from a surface FA (i.e., a line joining points at the same membrane thickness) as illustrated in FIG. 3A and to measure lengths Lh where the line L crossed a portion corresponding to an internal pore h in the image as illustrated in FIG. 3B (note that 100 of such lines were stretched at intervals dividing the total membrane thickness into 101 equal parts). An average value of the crossing lengths Lh was calculated by arithmetic averaging, and a cross-sectional pore diameter at each membrane thickness part was determined. When the magnification of a scanning electron micrograph is sufficiently high, a line that is equidistant from the surface FA may be approximated by a straight line. The maximum value of the determined cross-sectional pore diameter was used to normalize the cross-sectional pore diameter at each membrane thickness part. The first point reached from the surface FA at a point at which the normalized value was closest to 0.7 was taken to be the boundary layer between the layers.

(5) Three-dimensional solubility parameters

Three-dimensional solubility parameters were taken from the following book: Hansen, Charles (2007), Hansen Solubility Parameters: A User's Handbook, Second Edition, Boca Raton, Fla, CRC Press (ISBN 978-0-8493-7248-3).

(6) Internal and external surface pore diameter and surface porosity

The same electron microscope as in (4) was used to record an image of a surface at a filtration feed side. The image was recorded at a magnification enabling confirmation of the shapes of at least 20 pores. In the present examples and comparative examples, the image was recorded at ×10,000.

Using the recorded image, a transparent sheet was placed on a copy of the image, pore parts were blacked out using a black pen or the like, and the transparent sheet was copied onto a blank sheet such that pores parts indicated by black were clearly discernable from non-pore parts indicated by white as described in WO 2001/53213 A1, for example. Thereafter, commercially available image analysis software WinROOF 6.1.3 was used to perform binarization by a discriminant analysis method. Occupied area in a binarized image obtained in this manner was then determined so as to determine the surface porosity of a surface FA and a surface FB.

The pore diameter was determined by calculating an equivalent circle diameter for each pore present at a surface, adding the areas of these pores in descending order of pore diameter, and determining the diameter of a pore at which the sum of the added areas reached 50% of the total area of the pores.

(7) Membrane surface abrasion resistance ratio

A membrane surface abrasion resistance ratio is one index for judging the degree of deterioration of water permeation performance caused by membrane surface abrasion. A wet hollow fiber membrane (sample length: 100 mm) that had been immersed in ethanol and then repeatedly immersed in pure water a number of times was arranged on a metal plate. Turbid water obtained by suspending 20 mass% of fine sand (particle diameter: 130 μm; Fuji Brown FRR#120) in water was sprayed from a nozzle set 70 cm above the membrane with a pressure of 0.1 MPa such that the turbid water was sprayed against an external surface of the membrane. After 15 minutes of spraying, the membrane was turned around and another 15 minutes of spraying was performed. The pure water flux was measured before and after spraying in order to determine the membrane surface abrasion resistance ratio by the following formula.

$$\text{Membrane surface abrasion resistance ratio [\%]} = 100 \times \text{(Pure water flux after spraying)/(Pure water flux before spraying)}$$

(8) Internal porosity, polymer skeleton size, and cross-sectional pore diameter

A porous hollow fiber membrane was cut in a circular ring shape at a cross-section perpendicular to the fiber length direction and was then embedded in epoxy resin. The sample cross-section was trimmed, was subsequently subjected to BIB processing so as to prepare a smooth cross-section, and was then subjected to conductive treatment to prepare a microscope sample. Each microscope sample was prepared for one cutting location.

An electron microscope SU7000 produced by Hitachi, Ltd. was used to acquire an electron microscope (SEM) image for a membrane cross-section of the prepared microscope sample. The image acquisition conditions were as follows. Note that 5 viewing fields including an external surface part were recorded for each microscope sample.

Image acquisition conditions
Accelerating voltage: 1 kV
Detector: Backscattered electron detector
Image magnification: ×5,000 (display magnification of device)
Image resolution: 2560 × 1920 pixels

Image analysis was performed using Imaged. First, "Plugins-Bilateral Filter Fiji" was performed (10 times under conditions of spatial radius=3, range radius=50) so as to perform filter processing. The SEM image that had undergone filter processing was then subjected to threshold processing (Image-Adjust-Threshold: Maximum entropy method (Max-Entropy selected)) so as to binarize the image into internal pore parts (parts where internal pores were embedded with embedding resin) and polymer skeleton parts.

By using the top of the binarized image as a reference, a pixel for a membrane part closest to the top of the image was taken to be a site for a membrane thickness of 0 nm. Regions at a specific thickness (for example, a thickness of 100 nm, or a thickness of 50 nm depending on the case) in the membrane thickness direction were consecutively clipped, and the internal porosity, polymer skeleton size, and cross-sectional pore diameter were calculated from each image by the following method. For example, the internal porosity, polymer skeleton size, and cross-sectional pore diameter in a region of 0 nm to 300 nm were taken to be arithmetic mean values for the internal porosity, polymer skeleton size, and cross-sectional pore diameter in regions of 0 nm to 100 nm, 100 nm to 200 nm, and 200 nm to 300 nm for which the consecutive clipping and calculation described above were performed. Moreover, the internal porosity, polymer skeleton size, and cross-sectional pore diameter in a region of 0 nm to 1,250 nm, for example, were taken to be arithmetic mean values for the internal porosity, polymer skeleton size, and cross-sectional pore diameter in regions of 0 nm to 50 nm, 50 nm to 100 nm, ..., 1,150 nm to 1,200 nm, and 1,200 nm to 1,250 nm for which consecutive clipping and calculation described above were performed.

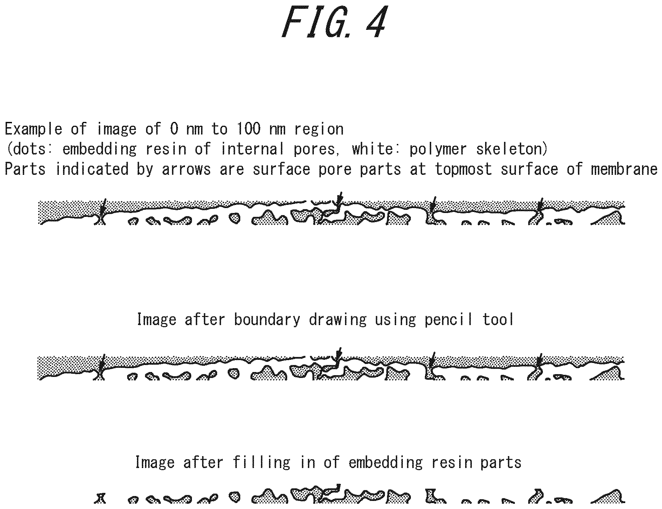

Note that an image for a region of 0 nm to 100 nm includes surface pore parts at the topmost surface of the membrane. Therefore, in calculation of the internal porosity and cross-sectional pore diameter, it is necessary to define the topmost surface of the membrane and to calculate values from a binary image of only internal pores. A binary image of only internal pores was obtained by using a pencil tool in Photoshop Elements 9 (Adobe Inc.) to manually determine a surface pore part/embedding resin part boundary at the topmost surface of the membrane and then filling in embedding resin parts to obtain a binary image of only internal pores. A specific example of this operation is illustrated in FIG. 4. With respect to an image in which the brightness of polymer skeleton was 255 (white) and the brightness of internal pores and embedding resin was 0 (black), the pencil tool was used to draw a line joining both ends of a surface pore part at the topmost surface of the membrane. Next, a filling in tool was used to fill in embedding resin parts with a brightness of 0 (black) so as to obtain a binarized image of only internal pores in the region of 0 nm to 100 nm. Positions of both ends of a surface pore part at the topmost surface of the membrane were determined through arbitrary judgment of the operator.

Internal porosity (%): "Analyze-Analyze Particles" was applied with respect to the binary image of internal pores (internal pore part brightness: 0 (= black)), and the arithmetic mean of "%Area" in "Summary" for 5 viewing fields was taken to be the internal porosity. Settings for "Analyze Particles" were as follows.

    Size (Pixel^2): 0-infinity
    Circularity: 0-1.00
    Summarize: Box checked
    Exclude on edges: Box not checked
    Include Holes: Box not checked

Polymer skeleton size: With respect to a binary image of the membrane (image in which parts corresponding to polymer have brightness of 0 (= black)), "Plugins-BoneJ-Thickness" of ImageJ was applied so as to acquire a "LocalThickness" image. "Analyze-Histogram" was then applied with respect to the "LocalThickness" image so as to acquire numerical details for local thickness. An arithmetic mean value was calculated from values acquired for local thickness in 5 viewing fields, and this arithmetic mean value was defined as the polymer skeleton size.

Cross-sectional pore diameter: With respect to a binary image of pores (image in which parts corresponding to pores have brightness of 0 (= black)), "Plugins-BoneJ-Thickness" of ImageJ was applied so as to acquire a "LocalThickness" image. "Analyze-Histogram" was then applied with respect to the "LocalThickness" image to acquire numerical details of the local thickness. An arithmetic mean value was calculated from values acquired for local thickness in 5 viewing fields, and this arithmetic mean value was defined as the cross-sectional pore diameter.

(9) Water permeation performance test

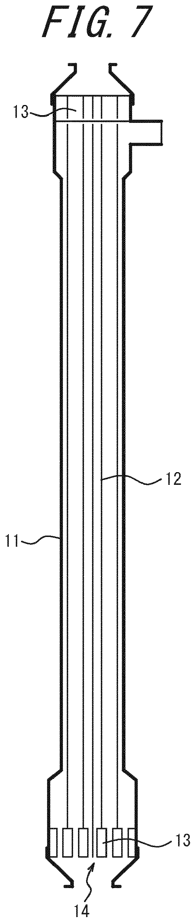

A filtration module 11 such as illustrated in FIG. 7 was produced using hollow fiber membranes 12. The filtration module 11 had a membrane effective length of 1 m and included 300 hollow fibers. An epoxy sealant 13 sealed between the hollow fibers at both ends thereof. Hollow parts of the hollow fiber membranes were open at an upper end of the module and were sealed at a lower end of the module. River water having a turbidity of 2 to 4 was caused to pass through a feeding port 14 for source water and air and was filtered at the external surface side of the hollow fibers so as to obtain filtered water from the internal surface side at the upper end. The set flux was raised stepwise (set flux (m/day) is a value obtained by dividing the filtration flow rate ($m^3$/day) by the membrane external surface area ($m^2$)), and the flux directly before transmembrane pressure dramatically increased was taken to be the critical flux (m/day). The dramatic increase of transmembrane pressure was judged with an increase rate of approximately 50 kPa/5 days as a rough guide.

(Example 1)

A vinylidene fluoride homopolymer (KF-W#1000 produced by Kureha Corporation) as a thermoplastic resin, a mixture of di(2-ethylhexyl) phthalate (DEHP) (produced by CG Ester Corporation) and dibutyl phthalate (DBP) (produced by CG Ester Corporation) as an organic liquid, and fine powder silica (produced by Nippon Aerosil Co., Ltd.; product name: AEROSIL-R972; primary particle diameter: approximately 16 nm) as an inorganic fine powder were used to perform melt extrusion of a hollow fiber membrane from an extruder using a nozzle for hollow fiber formation. A melt-kneaded product having a composition of vinylidene fluoride homopolymer:di(2-ethylhexyl) phthalate:dibutyl phthalate:fine powder silica = 40.0:30.8:6.20:23.0 (mass ratio), which was used as a melt-kneaded product, and air, which was used as a fluid for hollow part formation, were both extruded at a discharge temperature of 240°C from the nozzle for hollow fiber formation, which had an external diameter of 2.0 mm and an internal diameter of 0.9 mm.

The hollow fiber-shaped melt-kneaded product that was extruded at a discharge temperature of 240°C was passed through a high-temperature vessel having a set temperature of 240°C for 0.053 seconds, and, after 0.60 seconds of free traveling inclusive of the high-temperature vessel section, was guided into a coagulating bath holding 30°C water. The hollow fiber-shaped melt-kneaded product was taken up at a rate of 30 m/min, was sandwiched between belts, and was stretched at a rate of 60 m/min. Thereafter, the hollow fiber-shaped melt-kneaded product was caused to contract at a rate of 45 m/min while being blown with 140°C hot air, and was wound up into a skein. The air speed in the free traveling part was set as 0.80 m/sec.

The resultant hollow fiber-shaped product was immersed in isopropyl alcohol so as to extract and remove di(2-ethylhexyl) phthalate and dibutyl phthalate and was subsequently dried. Next, the hollow fiber-shaped product was immersed in 50 mass% ethanol aqueous solution for 30 minutes, was then immersed in water for 30 minutes, was subsequently immersed in 20 mass% sodium hydroxide aqueous solution at 70°C for 1 hour, and was also repeatedly washed with water so as to extract and remove the fine powder silica and thereby obtain a porous hollow fiber membrane.

The obtained porous hollow fiber membrane was a porous membrane for which an external surface thereof (surface at external diameter side) was taken to be a surface at a filtration feed side.

Details of composition and conditions are shown in Table 1.

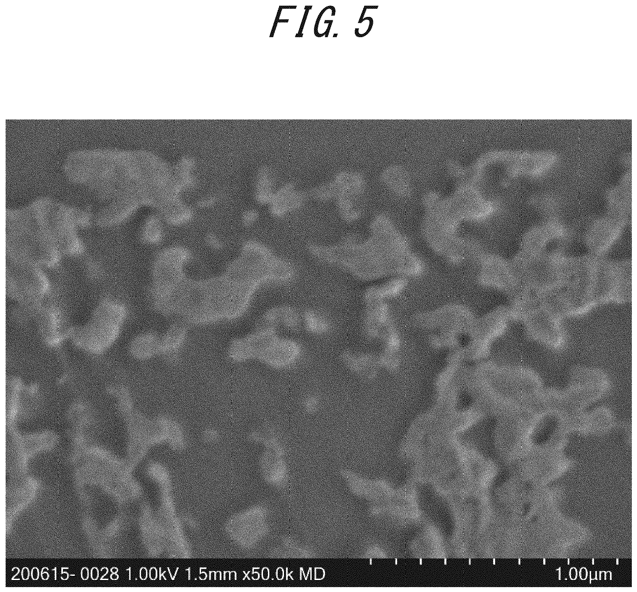

FIG. 5 is an electron micrograph of a cross-section in proximity to the filtration feed side of the obtained porous hollow fiber membrane.

(Example 2)

A porous hollow fiber membrane was obtained by the same method as in Example 1 with the exception that the composition of the melt-kneaded product was set as vinylidene fluoride homopolymer:di(2-ethylhexyl) phthalate:dibutyl phthalate:fine powder silica = 34.0:32.5:8.10:25.4 (mass ratio).

Details of composition and conditions are shown in Table 1.

(Example 3)

A porous hollow fiber membrane was obtained by the same method as in Example 1 with the exception that the time passing through the high-temperature vessel in the free traveling part was set as 0.018 seconds.

Details of composition and conditions are shown in Table 1.

(Example 4)

A porous hollow fiber membrane was obtained by the same method as in Example 1 with the exception that the air speed in the free traveling part was set as 1.8 m/sec.

Details of composition and conditions are shown in Table 1.

(Example 5)

A porous hollow fiber membrane was obtained by the same method as in Example 1 with the exception that a mixture of di(2-ethylhexyl) adipate (DOA) (produced by Tokyo Chemical Industry Co., Ltd.) and dibutyl sebacate (DBS) (produced by FUJIFILM Wako Pure Chemical Corporation) was used as an organic liquid, and the composition of the melt-kneaded product was set as vinylidene fluoride homopolymer:di(2-ethylhexyl) adipate:dibutyl sebacate:fine powder silica = 40.0:25.0:12.0:23.0 (mass ratio).

Details of composition and conditions are shown in Table 1.

(Example 6)

A porous hollow fiber membrane was obtained by the same method as in Example 1 with the exception that the external diameter was set as 0.9 mm and the internal diameter was set as 0.6 mm.

Details of composition and conditions are shown in Table 1.

(Example 7)

A porous hollow fiber membrane was obtained by the same method as in Example 1 with the exception that a step of stretching and contraction was not performed.

Details of composition and conditions are shown in Table 1.

(Example 8)

A porous hollow fiber membrane was produced with a two-layer structure having a layer (A) at an external surface side of the hollow fiber membrane and a layer (B) at an internal surface side of the hollow fiber membrane. A vinylidene fluoride homopolymer was used as a thermoplastic resin, a mixture of di(2-ethylhexyl) phthalate and dibutyl phthalate was used as an organic liquid, and fine powder silica was used as an inorganic fine powder. Melt extrusion of the hollow fiber membrane was performed by two extruders with the composition of a melt-kneaded product for the layer (A) set as vinylidene fluoride homopolymer:di(2-ethylhexyl) phthalate:dibutyl phthalate:fine powder silica = 34.0:32.5:8.1:25.4 (mass ratio) and the composition of a melt-kneaded product for the layer (B) set as vinylidene fluoride homopolymer:di(2-ethylhexyl) phthalate:dibutyl phthalate:fine powder silica = 40.0:31.7:5.3:23.0 (mass ratio). The melt-kneaded products were extruded from a nozzle for triple ring hollow fiber formation with a discharge temperature of 250°C and using air as a fluid for hollow part formation. The outermost diameter and the innermost diameter of the nozzle for triple ring hollow fiber formation were set as 2.0 mm and 0.9 mm, respectively, and the diameter of a part corresponding to a boundary between melt-kneaded product discharge ports for the layer (A) and the layer (B) was set as 1.8 mm. Steps after discharge of the melt-kneaded products were performed by the same method as in Example 1 to obtain a porous hollow fiber membrane.

The obtained porous hollow fiber membrane was a porous membrane for which an external surface (surface at external diameter side) was taken to be a surface at a filtration feed side.

Details of composition and conditions are shown in Table 2.

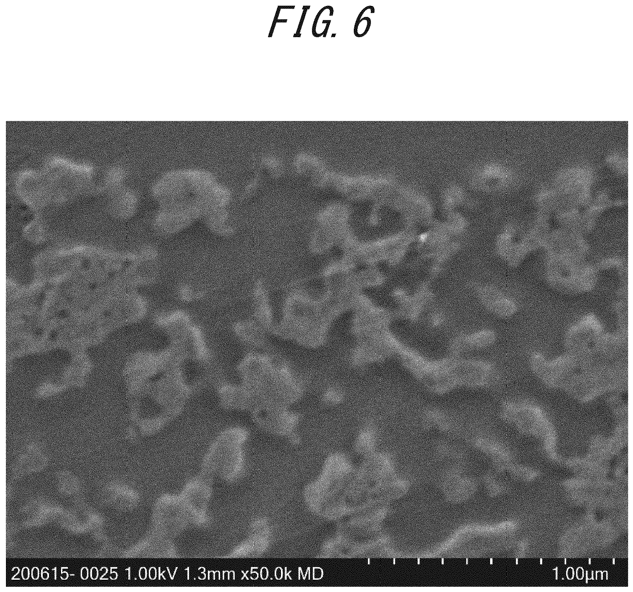

FIG. 6 is an electron micrograph of a cross-section in proximity to the filtration feed side of the obtained porous hollow fiber membrane.

(Example 9)

A porous hollow fiber membrane was obtained by the same method as in Example 8 with the exception that the composition of the melt-kneaded product for the layer (A) was set as vinylidene fluoride homopolymer:di(2-ethylhexyl) phthalate:dibutyl phthalate:fine powder silica = 25.0:35.9:10.3:28.8 (mass ratio).

Details of composition and conditions are shown in Table 2.

(Example 10)

A porous hollow fiber membrane was obtained by the same method as in Example 8 with the exception that the composition of the melt-kneaded product for the layer (A) was set as vinylidene fluoride homopolymer:di(2-ethylhexyl) phthalate:dibutyl phthalate:fine powder silica = 20.0:38.3:10.9:30.8 (mass ratio) and the free traveling time was set as 0.42 seconds.

Details of composition and conditions are shown in Table 2.

(Example 11)

A porous hollow fiber membrane was obtained by the same method as in Example 8 with the exception that the time passing through the high-temperature vessel in the free traveling part was set as 0.018 seconds.

Details of composition and conditions are shown in Table 2.

(Example 12)

A porous hollow fiber membrane was obtained by the same method as in Example 8 with the exception that the air speed in the free traveling part was set as 1.8 m/sec.

Details of composition and conditions are shown in Table 2.

(Example 13)

A porous hollow fiber membrane was obtained by the same method as in Example 8 with the exception that the external diameter was set as 0.9 mm and the internal diameter was set as 0.6 mm.

Details of composition and conditions are shown in Table 2.

(Comparative Example 1)

A porous hollow fiber membrane was obtained by the same method as in Example 1 with the exception that the time passing through the high-temperature vessel in the free traveling part was set as 0.012 seconds.
Details of composition and conditions are shown in Table 1.

(Comparative Example 2)

A porous hollow fiber membrane was obtained by the same method as in Example 1 with the exception that the air speed in the free traveling part was set as 2.1 m/sec.
Details of composition and conditions are shown in Table 1.

(Comparative Example 3)

A porous hollow fiber membrane was obtained by the same method as in Example 7 with the exception that the time passing through the high-temperature vessel in the free traveling part was set as 0.012 seconds.
Details of composition and conditions are shown in Table 1.

(Comparative Example 4)

A porous hollow fiber membrane was obtained by the same method as in Example 1 with the exception that the composition of the melt-kneaded product was set as vinylidene fluoride homopolymer:di(2-ethylhexyl) phthalate:dibutyl phthalate:fine powder silica = 34.0:32.5:8.10:25.4 (mass ratio), the time passing through the high-temperature vessel in the free traveling part was set as 0.012 seconds, and the air speed in the free traveling part was set as 2.1 m/sec.
Details of composition and conditions are shown in Table 1.

(Comparative Example 5)

A porous hollow fiber membrane was obtained by the same method as in Example 8 with the exception that the time passing through the high-temperature vessel in the free traveling part was set as 0.012 seconds.
Details of composition and conditions are shown in Table 2.

(Comparative Example 6)

A porous hollow fiber membrane was obtained by the same method as in Example 8 with the exception that the air speed in the free traveling part was set as 2.1 m/sec.
Details of composition and conditions are shown in Table 2.

(Comparative Example 7)

A porous hollow fiber membrane was obtained by the same method as in Example 10 with the exception that the time passing through the high-temperature vessel in the free traveling part was set as 0.012 seconds.
Details of composition and conditions are shown in Table 2.

[Table 1]

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Production comditions | Resin | - | PVDF | PVDF | PVDF | PVDF | PVDF | PVDF | PVDF | PVDF | PVDF | PVDF | PVDF |
| | Additive amount of resin | Mass% | 40.0 | 34.0 | 40.0 | 40.0 | 40.0 | 40.0 | 40.0 | 40.0 | 40.0 | 40.0 | 37.0 |
| | Organic liquid | - | DEHP/ DBP | DEHP/ DBP | DEHP/ DBP | DEHP/ DBP | DOA/ DBS | DEHP/ DBP | DEHP/ DBP | DEHP/ DBP | DEHP/ DBP | DEHP/ DBP | DEHP/ DBP |
| | Amount of organic liquid | Mass%/ Mass% | 30.8/6.2 | 32.5/8.1 | 30.8/6.2 | 30.8/6.2 | 25,0/12 0 | 30.8/6.2 | 30.8/6.2 | 30.8/6.2 | 30.8/6.2 | 30.8/6.2 | 32.3/6.5 |
| | Additive | - | Fine powder silica | Fine powder silica | Fine powder silica | Fine powder silica | Fine powder silica | Fine powder silica | Fine powder silica | Fine powder silica | Fine powder silica | Fine powder silica | Fine powder silica |
| | Amount of additive | Mass% | 23.0 | 25.4 | 23.0 | 23.0 | 23.0 | 23.0 | 23.0 | 23.0 | 23.0 | 23.0 | 24.2 |
| | Discharge temperature of melt-kneaded product | °C | 240 | 240 | 240 | 240 | 240 | 240 | 240 | 240 | 240 | 240 | 240 |
| | Coasulation tank | - | Water | Water | Water | Water | Water | Water | Water | Water | Water | Water | Water |
| | Coagulation tank temperature | °C | 30 | 30 | 30 | 30 | 30 | 30 | 30 | 30 | 30 | 30 | 30 |
| | Free traveling time | sec | 0.60 | 0.60 | 0.60 | 0.60 | 0.60 | 0.60 | 0.60 | 0.60 | 0.60 | 0.60 | 0.60 |

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Time passing through high-temperature vessel in free traveling part | sec | 0.053 | 0.053 | 0.018 | 0.053 | 0.053 | 0.053 | 0.053 | 0.012 | 0.053 | 0.012 | 0.012 |
| Set temperature of high-temperature vessel in free traveling part | °C | 240 | 240 | 240 | 240 | 240 | 240 | 240 | 240 | 240 | 240 | 240 |
| Air speed of free traveling part | m/sec | 0.80 | 0.80 | 0.80 | 1.80 | 0.80 | 0.80 | 0.80 | 0.80 | 2.10 | 0.80 | 2.10 |
| Fluid for hollow formation | - | Air | Air | Air | Air | Air | Air | Air | Air | Air | Air | Air |
| Take-un rate | m/min | 34 | 34 | 34 | 34 | 34 | 34 | 34 | 34 | 34 | 34 | 34 |
| Stretch ratio | Times | 2.0 | 2.0 | 2.0 | 2.0 | 2.0 | 2.0 | - | 2.0 | 2.0 | - | 2.0 |
| Set temperature of stretching | °C | 40 | 40 | 40 | 40 | 40 | 40 | - | 40 | 40 | - | 40 |
| Contraction ratio | Times | 1.5 | 1.5 | 1.5 | 1.5 | 1.5 | 1.5 | - | 1.5 | 1.5 | - | 1.5 |
| Set temperature of contraction | °C | 140 | 140 | 140 | 140 | 140 | 140 | - | 140 | 140 | - | 140 |

EP 4 249 108 A1

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| | Pure water permeability | L/m$^2$/hr | 4000 | 5000 | 4000 | 4000 | 4000 | 6000 | 2000 | 4000 | 4000 | 2000 | 4500 |
| | External diameter | mm | 1.2 | 1.2 | 1.2 | 1.2 | 1.2 | 0.9 | 1.2 | 1.2 | 1.2 | 1.2 | 1.2 |
| | Internal diameter | mm | 0.7 | 0.7 | 0.7 | 0.7 | 0.7 | 0.6 | 0.7 | 0.7 | 0.7 | 0.7 | 0.7 |
| | Membrane thickness | mm | 0.25 | 0.25 | 0.25 | 0.25 | 0.25 | 0.15 | 0.25 | 0.25 | 0.25 | 0.25 | 0.25 |
| | Surface porosity (external surface) | % | 30 | 40 | 30 | 30 | 30 | 30 | 30 | 30 | 30 | 30 | 35 |
| | Pore structure | - | 3D network | 3D network | 3D network | 3D network | 3D network | 3D network | 3D network | 3D network | 3D network | 3D network | 3D network |
| | Breaking strength | MPa | 10 | 7 | 10 | 10 | 10 | 10 | 10 | 10 | 10 | 10 | 8 |
| | Breaking elongation | % | 120 | 100 | 120 | 120 | 120 | 120 | 120 | 120 | 120 | 120 | 110 |
| | Internal porosity (overall membrane) | % | 70 | 75 | 70 | 70 | 70 | 70 | 65 | 70 | 70 | 70 | 72 |

EP 4 249 108 A1

26

| Performance , etc. | Analysis range 1 | Analyzed thickness from topmost surface at filtration feed side | nm | 300 | 300 | 300 | 300 | 300 | 180 | 300 | 300 | 300 | 300 | 300 |
|---|---|---|---|---|---|---|---|---|---|---|---|---|---|---|
| | | | | Example 1 | Example 2 | Example 3 | Example 4 | Example 5 | Example 6 | Example 7 | Comparative Example 1 | Comparative Example 2 | Comparative Example 3 | Comparative Example 4 |
| | | Ratio of analyzed thickness relative to membrane thickness | % | 0.12 | 0.12 | 0.12 | 0.12 | 0.12 | 0.12 | 0.12 | 0.12 | 0.12 | 0.12 | 0.12 |
| | | Internal porosity | % | 43 | 45 | 38 | 38 | 42 | 40 | 35 | 27 | 29 | 20 | 23 |
| | | Polymer skeleton size | nm | 130 | 115 | 105 | 110 | 135 | 135 | 150 | 80 | 90 | 95 | 95 |
| | | Cross-sectional pore diameter | nm | 140 | 160 | 140 | 140 | 140 | 140 | 140 | 140 | 140 | 140 | 150 |
| | | Internal porosity/ Surface porosity | - | 1.43 | 1.13 | 1.27 | 1.27 | 1.40 | 1.33 | 1.17 | 0.90 | 0.97 | 0.67 | 0.66 |
| | | Internal porosity × Surface porosity | %·% | 1290 | 1800 | 1140 | 1140 | 1260 | 1290 | 875 | 810 | 840 | 600 | 805 |

EP 4 249 108 A1

| | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|
| Analysis range 2 | | Analyzed thickness from topmost surface at filtration feed side | nm | - | - | - | - | - | 300 | - | - | - | - | - |
| | | Ratio of ana-lyzed thick-ness relative to mem-brane thick-ness | % | - | - | - | - | - | 0.20 | - | - | - | - | - |
| | | Internal po-rosity | % | - | - | - | - | - | 43 | - | - | - | - | - |
| | | Polymer skeleton size | nm | - | - | - | - | - | 130 | - | - | - | - | - |
| | | Cross-sectional pore diameter | nm | - | - | - | - | - | 140 | - | - | - | - | - |
| | | Internal po-rosity/ Sur-face porosity | - | - | - | - | - | - | 1.43 | - | - | - | - | - |

(continued)

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Analysis range 3 | | Analyzed thickness from topmost surface at filtration feed side | nm | 100 | 100 | 100 | 100 | 100 | 60 | 100 | 100 | 100 | 100 | 100 |
| | | Ratio of analyzed thickness relative to membrane thickness | % | 0.04 | 0.04 | 0.04 | 0.04 | 0.04 | 0.04 | 0.04 | 0.04 | 0.04 | 0.04 | 0.04 |
| | | Internal porosity | % | 29 | 34 | 21 | 22 | 31 | 28 | 21 | 18 | 17 | 15 | 17 |
| | | Polymer skeleton size | nm | 127 | 115 | 103 | 101 | 125 | 120 | 100 | 90 | 80 | 70 | 80 |
| | | Internal porosity/ Surface porosity | - | 0.97 | 0.85 | 0.70 | 0.73 | 1.03 | 0.93 | 0.70 | 0.60 | 0.57 | 0.50 | 0.49 |

(continued)

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Analysis range 4 | Analyzed thickness from topmost surface at filtration feed side | nm | - | - | - | - | - | 100 | - | - | - | - | - |
| | Ratio of analyzed thickness relative to membrane thickness | % | - | - | - | - | - | 0.067 | - | - | - | - | - |
| | Internal porosity | % | - | - | - | - | - | 29 | - | - | - | - | - |
| | Polymer skeleton size | nm | - | - | - | - | - | 127 | - | - | - | - | - |
| | Internal porosity/ Surface porosity | - | - | - | - | - | - | 0.97 | - | - | - | - | |
| | Critical flux | m/day | 2.6 | 3.0 | 2.6 | 2.5 | 2.6 | 2.6 | 2.3 | 1.6 | 1.6 | 1.4 | 1.4 |
| | Membrane surface abrasion resistance | % | 80 | 80 | 80 | 80 | 80 | 80 | 80 | 60 | 60 | 60 | 60 |

[Table 2]

| | | | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|---|---|
| Production conditions | Layer (B) | Resin | - | PVDF | PVDF | PVDF | PVDF | PVDF | PVDF | PVDF | PVDF | PVDF |
| | | Additive amount of resin | Mass% | 400 | 400 | 40.0 | 40.0 | 40.0 | 40.0 | 40.0 | 400 | 400 |
| | | Orfanic liquid | - | DEHP/ DBP | DEHP/ DBP | DEHP/ DBP | DEHP/ DBP | DEHP/ DBP | DEHP/ DBP | DEHP/ DBP | DEHP/ DBP | DEHP/ DBP |
| | | Amount of organic liquid | Mass%/ Mass% | 31.7/5.3 | 31.7/5.3 | 31.7/5.3 | 31.7/5.3 | 31.7/5.3 | 31.7/5.3 | 31.7/5.3 | 31.7/5.3 | 31.7/5.3 |
| | | Additive | - | Fine powder silica | Fine powder silica | Fine powder silica | Fine powder silica | Fine powder silica | Fine powder silica | Fine powder silica | Fine powder silica | Fine powder silica |
| | | Amount of additive | Mass% | 23.0 | 23.0 | 23.0 | 23.0 | 23.0 | 23.0 | 23.0 | 23.0 | 23.0 |
| | Layer (A) | Resin | - | PVDF | PVDF | PVDF | PVDF | PVDF | PVDF | PVDF | PVDF | PVDF |
| | | Additive amount of resin | Mass% | 34.0 | 250 | 20.0 | 34.0 | 34.0 | 34.0 | 34.0 | 34.0 | 200 |
| | | Organic liquid | - | DEHP/ DBP | DEHP/ DBP | DEHP/ DBP | DEHP/ DBP | DEHP/ DBP | DEHP/ DBP | DEHP/ DBP | DEHP/ DBP | DEHP/ DBP |
| | | Amount of organic liquid | Mass%/ Mass% | 32.5/8.1 | 35.9/10.3 | 38.3/10.9 | 32.5/8.1 | 32.5/8.1 | 32.5/8.1 | 32.5/8.1 | 32.5/8.1 | 38.3/10.9 |
| | | Additive | - | Fine powder silica | Fine powder silica | Fine powder silica | Fine powder silica | Fine powder silica | Fine powder silica | Fine powder silica | Fine powder silica | Fine powder silica |
| | | Amount of additive | Mass% | 25.4 | 28.8 | 30.8 | 25.4 | 25.4 | 25.4 | 25.4 | 25.4 | 30.8 |
| | | Discharge temperature of melt-kneaded product | °C | 250 | 250 | 250 | 250 | 250 | 250 | 250 | 250 | 250 |

(continued)

| | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|
| Coagulation tank | - | Water | Water | Water | Water | Water | Water | Water | Water | Water |
| Coagulation tank temperature | °C | 30 | 30 | 30 | 30 | 30 | 30 | 30 | 30 | 30 |
| Free traveling time | sec | 0.60 | 0.60 | 0.42 | 0.60 | 0.60 | 0.60 | 0.60 | 0.60 | 0.42 |
| Time passing through high-temperature vessel in free traveling part | sec | 0.053 | 0.053 | 0.053 | 0.018 | 0.053 | 0.053 | 0.012 | 0.053 | 0.012 |
| Set temperature of high-temperature vessel in free traveling part | °C | 240 | 240 | 240 | 240 | 240 | 240 | 240 | 240 | 240 |
| Air speed of free traveling part | m/sec | 0.80 | 0.80 | 0.80 | 0.80 | 1.80 | 0.80 | 0.80 | 2.10 | 0.80 |
| Fluid for hollow formation | - | Air | Air | Air | Air | Air | Air | Air | Air | Air |
| Take-up rate | m/min | 34 | 34 | 34 | 34 | 34 | 34 | 34 | 34 | 34 |
| Stretch ratio | Times | 2.0 | 2.0 | 2.0 | 2.0 | 2.0 | 2.0 | 2.0 | 2.0 | 2.0 |
| Set temperature of stretching | °C | 40 | 40 | 40 | 40 | 40 | 40 | 40 | 40 | 40 |
| Contraction ratio | Times | 1.5 | 1.5 | 1.5 | 1.5 | 1.5 | 1.5 | 1.5 | 1.5 | 1.5 |

(continued)

| | | Example 8 | Example 9 | Example 10 | Example 11 | Example 12 | Example 13 | Comparativ e Example 5 | Comparativ e Example 6 | Comparativ e Example 7 |
|---|---|---|---|---|---|---|---|---|---|---|
| Set temperature of contraction | °C | 140 | 140 | 140 | 140 | 140 | 140 | 140 | 140 | 140 |
| Pure water permeability | L/m²/hr | 7000 | 8000 | 8000 | 7000 | 7000 | 8000 | 7000 | 7000 | 8000 |
| External diameter | mm | 1.2 | 1.2 | 1.2 | 1.2 | 1.2 | 0.9 | 1.2 | 1.2 | 1.2 |
| Internal diameter | mm | 0.7 | 0.7 | 0.7 | 0.7 | 0.7 | 0.6 | 0.7 | 0.7 | 0.7 |
| Membrane thickness | mm | 0.25 | 0.25 | 0.25 | 0.25 | 0.25 | 0.15 | 0.25 | 0.25 | 0.25 |
| Surface porosity | % | 40 | 50 | 55 | 40 | 40 | 40 | 40 | 40 | 55 |
| Pore structure | - | 3D network | 3D network | 3D network | 3D network | 3D network | 3D network | 3D network | 3D network | 3D network |
| Breaking strength | MPa | 10 | 10 | 10 | 10 | 10 | 10 | 10 | 10 | 10 |
| Breaking elongation | % | 120 | 120 | 120 | 120 | 120 | 120 | 120 | 120 | 120 |
| Internal porosity (overall membrane) | % | 70 | 70 | 70 | 70 | 70 | 70 | 70 | 70 | 70 |

(continued)

| | | | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|---|---|
| Analysis range 1 | | Analyzed thickness from topmost surface at filtration feed side | nm | 300 | 300 | 300 | 300 | 300 | 180 | 300 | 300 | 300 |
| | | Ratio of analyzed thickness relative to membrane thickness | % | 0.12 | 0.12 | 0.12 | 0.12 | 0.12 | 0.12 | 0.12 | 0.12 | 0.12 |
| | | Internal porosity | % | 46 | 57 | 62 | 45 | 45 | 43 | 29 | 28 | 33 |
| | | Polymer skeleton size | nm | 115 | 113 | 108 | 108 | 108 | 120 | 80 | 80 | 70 |
| | | Cross-sectional pore diameter | nm | 160 | 210 | 200 | 160 | 110 | 150 | 160 | 160 | 200 |
| | | Internal porosity/ Surface porosity | - | 1.15 | 1.14 | 1.13 | 1.13 | 1.13 | 1.08 | 0.73 | 0.70 | 0.60 |
| | | Internal porosity × Surface porosity | %·% | 1840 | 2850 | 3410 | 1800 | 1800 | 1840 | 840 | 840 | 825 |

EP 4 249 108 A1

34

(continued)

| Performance, etc. | | | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|---|---|
| | Analysis range 2 | Analyzed thickness from topmost surface at filtration feed side | nm | - | - | - | - | - | 300 | - | - | - |
| | | Ratio of analyzed thickness relative to membrane thickness | % | - | - | - | - | - | 0.2 | - | - | - |
| | | Internal porosity | % | - | - | - | - | - | 46 | - | - | - |
| | | Polymer skeleton size | nm | - | - | - | - | - | 115 | - | - | - |
| | | Cross-sectional core diameter | nm | - | - | - | - | - | 160 | - | - | - |
| | | Internal porosity/ Surface porosity | - | - | - | - | - | - | 1.15 | - | - | - |

(continued)

| | | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|---|
| Analysis range 3 | Analyzed thickness from topmost surface at filtration feed side | nm | 100 | 100 | 100 | 100 | 100 | 60 | 100 | 100 | 100 |
| | Ratio of analyzed thickness relative to membrane thickness | % | 0.04 | 0.04 | 0.04 | 0.04 | 0.04 | 0.04 | 0.04 | 0.04 | 0.04 |
| | Internal porosity | % | 34 | 36 | 40 | 33 | 34 | 31 | 17 | 18 | 19 |
| | Polymer skeleton size | nm | 114 | 116 | 110 | 113 | 114 | 110 | 90 | 90 | 80 |
| | Internal porosity/ Surface porosity | - | 0.85 | 0.72 | 0.73 | 0.83 | 0.85 | 0.78 | 0.43 | 0.45 | 0.35 |

| | | | | Example 8 | Example 9 | Example 10 | Example 11 | Example 12 | Example 13 | Comparative Example 5 | Comparative Example 6 | Comparative Example 7 |
|---|---|---|---|---|---|---|---|---|---|---|---|---|
| Analysis range 4 | | Analyzed thickness from topmost surface at filtration feed side | nm | - | - | - | - | - | 100 | - | - | - |
| | | Ratio of analyzed thickness relative to membrane thickness | % | - | - | - | - | - | 0.067 | - | - | - |
| | | Internal porosity | % | - | - | - | - | - | 34 | - | - | - |
| | | Polymer skeleton size | nm | - | - | - | - | - | 114 | - | - | - |
| | | Internal porosity/ Surface porosity | - | - | - | - | - | - | 0.85 | - | - | - |
| | | Critical flux | m/day | 30 | 3.6 | 40 | 30 | 30 | 3.0 | 1.6 | 1.6 | 1.5 |
| | | Abrasion resistance | % | 80 | 80 | 75 | 80 | 80 | 80 | 60 | 60 | 60 |

37

INDUSTRIAL APPLICABILITY

Through the present disclosure, a porous membrane having high filtration performance and abrasion resistance is provided.

**Claims**

1. A porous membrane in which a ratio of internal porosity in a thickness up to 0.12% of membrane thickness from a topmost surface of a surface at a filtration feed side relative to surface porosity of the surface at the filtration feed side is 1.05 or more.

2. The porous membrane according to claim 1, wherein surface porosity of the surface at the filtration feed side is 25% or more.

3. The porous membrane according to claim 1 or 2, wherein internal porosity in a thickness up to 0.12% of the membrane thickness from the topmost surface of the surface at the filtration feed side is 35% or more.

4. The porous membrane according to any one of claims 1 to 3, wherein polymer skeleton size in a thickness up to 0.12% of the membrane thickness from the topmost surface of the surface at the filtration feed side is 100 nm or more.

5. The porous membrane according to any one of claims 1 to 4, wherein surface porosity of the surface at the filtration feed side is 35% or more.

6. The porous membrane according to any one of claims 1 to 5, wherein a ratio of internal porosity in a thickness up to 0.04% of the membrane thickness from the topmost surface of the surface at the filtration feed side relative to surface porosity of the surface at the filtration feed side is 0.7 or more.

7. The porous membrane according to any one of claims 1 to 6, wherein internal porosity in a thickness up to 0.04% of the membrane thickness from the topmost surface of the surface at the filtration feed side is 20% or more.

8. The porous membrane according to any one of claims 1 to 7, wherein polymer skeleton size in a thickness up to 0.04% of the membrane thickness from the topmost surface of the surface at the filtration feed side is 100 nm or more.

9. The porous membrane according to any one of claims 1 to 8, wherein surface porosity of the surface at the filtration feed side is 35% or more and internal porosity in a thickness up to 0.12% of the membrane thickness from the topmost surface of the surface at the filtration feed side is 40% or more.

10. The porous membrane according to any one of claims 1 to 9, wherein cross-sectional pore diameter in a thickness up to 0.12% of the membrane thickness from the topmost surface of the surface at the filtration feed side is 300 nm or less.

11. The porous membrane according to any one of claims 1 to 10, wherein the membrane thickness is not less than 100 $\mu$m and not more than 500 $\mu$m.

12. The porous membrane according to any one of claims 1 to 11, wherein the porous membrane is a hollow fiber membrane and is formed of a thermoplastic resin.

13. The porous membrane according to claim 12, wherein the thermoplastic resin includes a fluororesin as a main component.

14. The porous membrane according to claim 13, wherein the fluororesin includes one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins.

15. A porous membrane in which a product of internal porosity in a thickness up to 0.12% of membrane thickness from a topmost surface of a surface at a filtration feed side multiplied by surface porosity of the surface at the filtration feed side is 860%·% or more.

16. The porous membrane according to claim 15, wherein internal porosity in a thickness up to 0.12% of the membrane thickness from the topmost surface of the surface at the filtration feed side is 35% or more.

17. The porous membrane according to claim 15 or 16, wherein surface porosity of the surface at the filtration feed side is 25% or more.

18. The porous membrane according to any one of claims 15 to 17, wherein a ratio of internal porosity in a thickness up to 0.12% of the membrane thickness from the topmost surface of the surface at the filtration feed side relative to surface porosity of the surface at the filtration feed side is 1.05 or more.

19. The porous membrane according to any one of claims 15 to 18, wherein polymer skeleton size in a thickness up to 0.12% of the membrane thickness from the topmost surface of the surface at the filtration feed side is 100 nm or more.

20. The porous membrane according to any one of claims 15 to 19, wherein a product of internal porosity in a thickness up to 0.12% of the membrane thickness from the topmost surface of the surface at the filtration feed side multiplied by surface porosity of the surface at the filtration feed side is 1140%·% or more.

21. The porous membrane according to any one of claims 15 to 20, wherein a ratio of internal porosity in a thickness up to 0.04% of the membrane thickness from the topmost surface of the surface at the filtration feed side relative to surface porosity of the surface at the filtration feed side is 0.7 or more.

22. The porous membrane according to any one of claims 15 to 21, wherein internal porosity in a thickness up to 0.04% of the membrane thickness from the topmost surface of the surface at the filtration feed side is 20% or more.

23. The porous membrane according to any one of claims 15 to 22, wherein polymer skeleton size in a thickness up to 0.04% of the membrane thickness from the topmost surface of the surface at the filtration feed side is 100 nm or more.

24. The porous membrane according to any one of claims 15 to 23, wherein surface porosity of the surface at the filtration feed side is 35% or more and internal porosity in a thickness up to 0.12% of the membrane thickness from the topmost surface of the surface at the filtration feed side is 40% or more.

25. The porous membrane according to any one of claims 15 to 24, wherein cross-sectional pore diameter in a thickness up to 0.12% of the membrane thickness from the topmost surface of the surface at the filtration feed side is 300 nm or less.

26. The porous membrane according to any one of claims 15 to 25, wherein the membrane thickness is not less than 100 μm and not more than 500 μm.

27. The porous membrane according to any one of claims 15 to 26, wherein the porous membrane is a hollow fiber membrane and is formed of a thermoplastic resin.

28. The porous membrane according to claim 27, wherein the thermoplastic resin includes a fluororesin as a main component.

29. The porous membrane according to claim 28, wherein the fluororesin includes one or more selected from the group consisting of vinylidene fluoride resin (PVDF), chlorotrifluoroethylene resin, tetrafluoroethylene resin, ethylene-tetrafluoroethylene copolymer (ETFE), ethylene-monochlorotrifluoroethylene copolymer (ECTFE), hexafluoropropylene resin, and mixtures of these resins.

# FIG. 1

# FIG. 2

## FIG. 3A

## FIG. 3B

## FIG. 4

Example of image of 0 nm to 100 nm region
(dots: embedding resin of internal pores, white: polymer skeleton)
Parts indicated by arrows are surface pore parts at topmost surface of membrane

Image after boundary drawing using pencil tool

Image after filling in of embedding resin parts

# FIG. 5

200615- 0028 1.00kV 1.5mm x50.0k MD                                           1.00μm

# FIG. 6

200615- 0025 1.00kV 1.3mm x50.0k MD                    1.00μm

## FIG. 7

## INTERNATIONAL SEARCH REPORT

| International application No. |
| --- |
| **PCT/JP2021/042475** |

| A. | CLASSIFICATION OF SUBJECT MATTER |
| --- | --- |

*B01D 69/00*(2006.01)i; *B01D 69/02*(2006.01)i; *B01D 69/08*(2006.01)i; *B01D 71/26*(2006.01)i; *B01D 71/30*(2006.01)i; *B01D 71/32*(2006.01)i; *B01D 71/34*(2006.01)i; *B01D 71/36*(2006.01)i
FI: B01D69/00; B01D69/02; B01D69/08; B01D71/26; B01D71/30; B01D71/32; B01D71/34; B01D71/36

According to International Patent Classification (IPC) or to both national classification and IPC

| B. | FIELDS SEARCHED |
| --- | --- |

Minimum documentation searched (classification system followed by classification symbols)

B01D69/00; B01D69/02; B01D69/08; B01D71/26; B01D71/30; B01D71/32; B01D71/34; B01D71/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2015/104871 A1 (ASAHI KASEI CHEMICALS CORP) 16 July 2015 (2015-07-16) paragraphs [0024], [0028], examples 1-3 | 1-29 |
| X | JP 2020-142191 A (ASAHI KASEI CORP) 10 September 2020 (2020-09-10) paragraph [0026], examples 1-3 | 1-29 |
| X | WO 2018/174279 A1 (ASAHI KASEI CORP) 27 September 2018 (2018-09-27) example 1 | 1-29 |
| A | JP 3-065223 A (MITSUBISHI RAYON CO LTD) 20 March 1991 (1991-03-20) | 1-29 |
| A | JP 2007-289886 A (TOYO BOSEKI) 08 November 2007 (2007-11-08) | 1-29 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 January 2022** | **18 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/042475**

| Patent document cited in search report | | | Publication date (day/month/year) | Patent family member(s) | | | Publication date (day/month/year) |
|---|---|---|---|---|---|---|---|
| WO | 2015/104871 | A1 | 16 July 2015 | US | 2016/0325237 | A1 | |
| | | | | paragraphs [0041], [0045], examples 1-3 | | | |
| | | | | CN | 105980039 | A | |
| JP | 2020-142191 | A | 10 September 2020 | (Family: none) | | | |
| WO | 2018/174279 | A1 | 27 September 2018 | US | 2020/0109070 | A1 | |
| | | | | example 1 | | | |
| | | | | EP | 3603777 | A1 | |
| | | | | CA | 3057270 | A1 | |
| | | | | AU | 2018236989 | A1 | |
| | | | | CN | 110461452 | A | |
| | | | | KR | 10-2019-0117707 | A | |
| | | | | TW | 201840357 | A | |
| JP | 3-065223 | A | 20 March 1991 | (Family: none) | | | |
| JP | 2007-289886 | A | 08 November 2007 | US | 2009/0110900 | A1 | |
| | | | | WO | 2007/125943 | A1 | |
| | | | | EP | 2022555 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60139815 A
- JP H3215535 A
- JP H4065505 A
- WO 2001053213 A1
- JP H11138164 A
- WO 2015104871 A1
- WO 200153213 A1

### Non-patent literature cited in the description

- **Y. WATANABE ; R. BIAN.** *Membrane,* 1999, vol. 24 (6), 310-318
- Dictionary of Plastic and Functional Polymeric Materials. Editorial Committee of Dictionary of Plastic and Functional Polymeric Materials. Industrial Research Center of Japan, February 2004, 672-679
- Production of Polymeric Porous Membranes by Thermally Induced Phase Separation (TIPS). **HIDETO MATSUYAMA.** Chemical Engineering. Kagaku Kogyo-sha Co., Ltd, June 1998, 45-56
- **AKIRA TAKIZAWA.** Membranes. *IPC,* January 1992, 404-406
- **D. R. LLOYD et al.** *Journal of Membrane Science,* 1991, vol. 64, 1-11
- Encyclopaedia Chimica. Kyoritsu Shuppan Co., Ltd, 1963, 860-867
- 12695 Chemical Products. Thermoplastics. The Chemical Daily Co., Ltd, 1995, 829-882
- Handbook of Chemistry, Applied Chemistry Section. Maruzen, 1980, 809-810
- **HANSEN, CHARLES.** Hansen Solubility Parameters: A User's Handbook. CRC Press, 2007